(19) Europäisches Patentamt
European Patent Office
Office européen des brevets

(11) EP 1 188 763 B1

(12) EUROPÄISCHE PATENTSCHRIFT

(45) Veröffentlichungstag und Bekanntmachung des Hinweises auf die Patenterteilung:
**09.03.2005 Patentblatt 2005/10**

(51) Int Cl.[7]: **C07F 7/30**, C07F 7/08, C07F 17/00 // C08F10/00

(21) Anmeldenummer: **01114147.0**

(22) Anmeldetag: **19.12.1994**

(54) **Metallocenverbindung und ihre Verwendung in Olefin-Polymerisation**

Metallocenes and their use in olefin polymerisation

Metallocènes, et leur utilisation dans la polymérisation d'oléfines

(84) Benannte Vertragsstaaten:
**AT BE DE ES FR GB IT NL**

(30) Priorität: **27.12.1993 DE 4344689**

(43) Veröffentlichungstag der Anmeldung:
**20.03.2002 Patentblatt 2002/12**

(62) Dokumentnummer(n) der früheren Anmeldung(en) nach Art. 76 EPÜ:
**94120070.1 / 0 659 757**

(73) Patentinhaber: **Basell Polyolefine GmbH**
**50389 Wesseling (DE)**

(72) Erfinder:
- **Winter, Andreas, Dr.**
  **61479 Glashütten (DE)**
- **Küber, Frank, Dr.**
  **61440 Oberursel (DE)**
- **Aulbach, Michael, Dr.**
  **67141 Neuhofen (DE)**
- **Bachmann, Bernd, Dr.**
  **64521 Gross-Gerau (DE)**
- **Klein, Robert, Dr.**
  **65933 Frankfurt am Main (DE)**
- **Kühlein, Klaus, Prof. Dr.**
  **65779 Kelkheim (DE)**
- **Spaleck, Walter, Dr.**
  **28359 Bremen (DE)**
- **Kohlpaintner, Christian, Dr.**
  **46485 Wesel (DE)**

(56) Entgegenhaltungen:
**DE-A- 4 431 643**

EP 1 188 763 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung bezieht sich auf einen Bisindenylligand und dessen Verwendung für die Herstellung einer Metallocenverbindung, die vorteilhaft bei technisch relevanten Temperaturen zur Herstellung von Polyolefinen mit hoher Isotaktizität und hoher Molmasse eingesetzt werden kann.

Aus der Literatur ist die Herstellung von Polyolefinen mit löslichen Metallocenverbindungen in Kombination mit Aluminoxanen oder anderen Cokatalysatoren, die aufgrund ihrer Lewis-Acidität das neutrale Metallocenen in ein Kation überführen und stabilisieren können, bekannt.

Beispielsweise wurde eine spezielle Voraktivierungsmethode des Metallocens mit einem Aluminoxan vorgeschlagen, welche zu einer beachtlichen Steigerung der Aktivität des Katalysatorsystems und zu einer deutlichen Verbesserung der Kornmorphologie des Polymeren führt (vgl. EP 0 302 424). Die Voraktivierung erhöht zwar die Molmasse, jedoch ist keine wesentliche Steigerung erreichbar.

Eine weitere, aber noch nicht ausreichende, Steigerung der Molmasse konnte durch Verwendung speziell heteroatomverbrückter Metallocene bei hoher Metallocenaktivität realisiert werden (EP-A 0 336 128).

Weiterhin sind Katalysatoren auf Basis Ethylenbisindenylhafniumdichlorid und Ethylen-bis(4,5,6,7-tetrahydro-1-indenyl)hafniumdichlorid und Methylaluminoxan bekannt, mit denen durch Suspensionspolymerisation höhermolekulare Polypropylene hergestellt werden können (vgl. J. A. Ewen et al., J. Am. Chem. Soc. 109 (1987) 6544). Unter technisch relevanten Polymerisationsbedingungen ist jedoch die Kornmorphologie der derart erzeugten Polymeren nicht befriedigend und die Aktivität der eingesetzten Katalysatoren vergleichsweise gering. Verbunden mit den hohen Katalysatorkosten ist somit mit diesen Systemen eine kostengünstige Polymerisation nicht möglich.

Eine deutliche Steigerung der Molmasse konnte durch die Verwendung von Metallocenen erreicht werden, bei denen die durch eine Brücke fixierten aromatischen π-Liganden in 2-Stellung (EP 485 822) oder in 2- und 4,6-Stellung (EP 545 303) Substituenten tragen.

Unter dem Zwang großtechnisch kostengünstiger Produktion muß bei möglichst hohen Reaktionstemperaturen polymerisiert werden, da bei höheren Polymeristionstemperaturen die entstehende Polymerisationswärme mit weniger Kühlmedium abgeführt werden kann und daher mit einer deutlich geringeren Dimensionierung des Kühlwasserkreislaufes realisierbar ist.

Die letztgenannten Metallocene mit Substituenten in 2- bzw. 4- und 6-Stellung zur Brücke sind in dieser Hinsicht bei 70°C Polymerisationstemperatur bereits sehr leistungsfähig, trotzdem sind die erzielbaren Molmassen bei technisch relevanten Polymerisationstemperaturen (z.B. 70°C) für einige technische Anwendungen wie beispielsweise die Herstellung von Polymeren für Rohre und Großhohlkörper sowie spezielle Fasern noch zu gering.

Metallocene mit zwei substituierten Cyclopentadienyl-π-Liganden wie etwa Dimethylsilandiyl(2-methyl-4-t-butyl-1-cyclopentadienyl)$_2$ZrCl$_2$ wurden ebenfalls als Polymerisationskatalysatoren vorgeschlagen (H.-H. Brintzinger et al., Angew. Chem. 102 (1990) 339), diese Systeme überzeugen jedoch bezüglich erzielbarer Polymermolmasse, Stereospezifität oder Polymerschmelzpunkt in keinster Weise, darüber hinaus ist ihre Polymerisationsaktivität sehr niedrig und die notwendige Trennung der ex Synthese anfallenden meso- und rac-Formen - nur mit der rac-Form ist isotaktisches Polyolefin herstellbar - ist sehr schwierig. Ferner fällt die meso-Form etwa in gleicher Menge wie die rac-Form an, was bedeutet, daß die Hälfte der eingesetzten Chemikalien entsorgt werden muß und nur die Hälfte des Produktes nutzbar ist.

In EP 544 308 werden Katalysatoren mit zwei verschiedenen π-Liganden wie etwa Isopropyliden(4-methyl-1-cyclopentadienyl)(3-t-butyl-1-indenyl)ZrCl$_2$. vorgeschlagen, die aufgrund ihrer Asymmetrie a priori keine meso-Form besitzen und somit das rac-/meso-Trennungsproblem umgehen, die Defizite bezüglich Polymereigenschaften und Katalysatoraktivität konnten jedoch nicht gelöst werden.

Aus Arbeiten von Ewen et al. (J. Am. Chem. Soc. 110 (1988) 6255) sind ebenfalls Katalysatoren mit zwei unterschiedlichen π-Liganden wie etwa Isopropyliden(cyclopentadienyl)(fluorenyl)ZrCl$_2$ bekannt. Diese asymmetrischen Verbindungen erzeugen jedoch syndiotaktische Polyolefine, die Herstellung von isotaktischen Polyolefinen ist damit nicht möglich.

Es bestand somit die Aufgabe ein Ligandsystem für ein Katalysatorsystem zur Verfügung zu stellen, welches die Nachteile des Standes der Technik vermeidet und insbesondere bei technisch relevanten Polymerisationstemperaturen mit hoher isotaktischer Stereoselektivität und Polymerisationsaktivität Polyolefine mit hoher Molmasse erzeugt.

Es wurde gefunden, daß durch einen Bisindenylligand für eine Metallocenverbindung mit zwei voneinander verschiedenen Indenyl-Liganden, die in bestimmter Weise substituiert sind, diese Aufgabe gelöst werden kann.

Aufgrund ihres chemischen Aufbaus besitzen die den erfindungsgemäßen Bisindenylligand enthaltenden Metallocene keine meso-Form, welche in aufwendiger Weise abgetrennt werden müßte, da mit meso-Formen nur ataktisches Polyolefin hergestellt werden kann.

Darüber hinaus ist es mit dem vorgeschlagenen Metallocenkatalysatorenkonzept möglich, durch Kombination weniger unterschiedlicher π-Liganden eine kostengünstig herzustellende Palette von Polymerisationkatalysatoren für unterschiedliche Polymerisations- und Produktanforderungen bereitzustellen.

Die vorliegende Erfindung betrifft Bisindenylliganden der Formel IV

$$HR^{c} - (CR^{8}R^{9})_{m} - R7 - (CR^{8}R^{9})_{n} - R^{d}H \qquad (IV)$$

mit

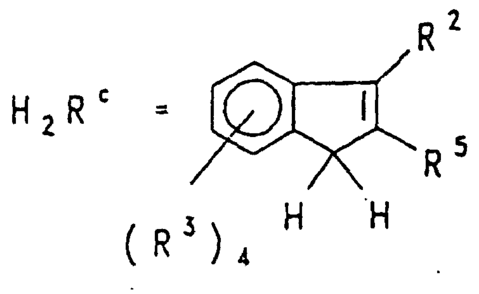

,

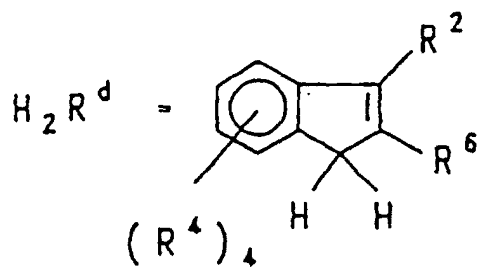

für die Herstellung einer Metalloceneverbindung der Formel I,

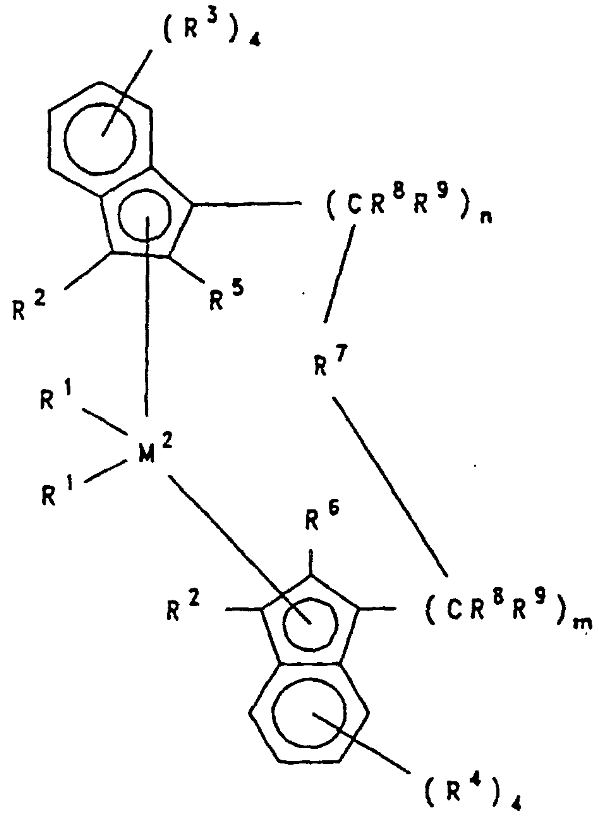

(I)

, worin

$M^2$ ein Metall der Gruppe IVb, Vb oder VIb des Periodensystems ist,

die Reste $R^1$ gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten,

die Reste $R^2$ gleich oder verschieden sind und Wasserstoff, ein Halogenatom, eine $C_1$-$C_{10}$-Alkylgruppe, die halogeniert sein kann, eine $C_6$-$C_{10}$-Arylgruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe, einen $-NR_2^{10}$, $-OR^{10}$, $-SR^{10}$, $-OSiR_3^{10}$, $-SiR_3^{10}$ oder $-PR_2^{10}$-Rest bedeuten,

worin $R^{10}$ ein Halogenatom, eine $C_1$-$C_{10}$-Alkylgruppe oder eine $C_6$-$C_{10}$-Arylgruppe bedeuten,

die Reste $R^3$ gleich oder verschieden sind und ein Wasserstoffatom, ein Halogenatom, eine $C_1$-$C_{20}$-Alkylgruppe, eine $C_1$-$C_{20}$-Fluoralkylgruppe, eine $C_6$-$C_{30}$-Arylgruppe, eine $C_6$-$C_{30}$-Fluorarylgruppe, eine $C_1$-$C_{20}$-Alkoxygruppe, eine $C_2$-$C_{20}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe, einen $-NR_2^{10}$, $-OR^{10}$, $-SR^{10}$, $-OSiR_3^{10}$, $-SiR_3^{10}$ oder $-PR_2^{10}$-Rest bedeuten, worin $R^{10}$ ein Halogenatom, eine $C_1$-$C_{10}$-Alkylgruppe oder eine $C_6$-$C_{10}$-Arylgruppe ist, oder zwei oder mehr Reste $R^3$ zusammen mit den sie verbindenden Atomen ein Ringsystem bilden,

die Reste $R^4$ gleich oder verschieden sind und ein Wasserstoffatom, ein Halogenatom, eine $C_1$-$C_{20}$-Alkylgruppe, eine $C_1$-$C_{20}$-Fluoralkylgruppe, eine $C_6$-$C_{30}$-Arylgruppe, eine $C_6$-$C_{30}$-Fluorarylgruppe, eine $C_1$-$C_{20}$-Alkoxygruppe, eine $C_2$-$C_{20}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe, einen $-NR_2^{10}$, $-OR^{10}$, $-SR^{10}$, $-OSiR_3^{10}$, $-SiR_3^{10}$ oder $-PR_2^{10}$-Rest bedeuten, worin $R^{10}$ ein Halogenatom, eine $C_1$-$C_{10}$-Alkylgruppe oder eine $C_6$-$C_{10}$-Arylgruppe ist, oder zwei oder mehr Reste $R^4$ zusammen mit den sie verbindenden Atomen ein Ringsystem bilden,

$R^5$ ein Halogenatom, eine $C_1$-$C_{10}$-Alkylgruppe, die halogeniert sein kann, eine $C_6$-$C_{10}$-Arylgruppe, eine $C_2$-$C_{10}$-Alkenylgruppe, eine $C_7$-$C_{40}$-Arylalkylgruppe, eine $C_7$-$C_{40}$-Alkyloxygruppe, eine $C_8$-$C_{40}$-Arylalkenylgruppe, einen $-NR_2^{10}$, $-OR^{10}$, $-SR^{10}$, $-OSiR_3^{10}$, $-SiR_3^{10}$ oder $-PR_2^{10}$-Rest, worin $R^{10}$ ein Halogenatom, eine $C_1$-$C_{10}$-Alkylgruppe oder eine $C_6$-$C_{10}$-Arylgruppe ist, bedeutet,

$R^6$ ein Wasserstoffatom, ein Halogenatom, eine $C_1$-$C_{10}$-Alkylgruppe, die halogeniert sein kann, eine $C_6$-$C_{10}$-Arylgruppe, eine $C_2$-$C_{10}$-Alkenylgruppe, eine $C_7$-$C_{40}$-Arylalkylgruppe, eine $C_7$-$C_{40}$-Alkyloxygruppe, eine $C_8$-$C_{40}$-Arylalkenylgruppe, einen $-NR_2^{10}$, $-OR^{10}$, $-SR^{10}$, $-OSiR_3^{10}$, $-SiR_3^{10}$ oder $-PR_2^{10}$-Rest, worin $R^{10}$ ein Halogenatom, eine $C_1$-$C_{10}$-Alkylgruppe oder eine $C_6$-$C_{10}$-Arylgruppe ist, bedeutet,

$R^7$

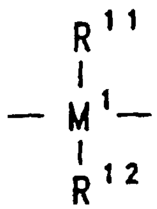 , 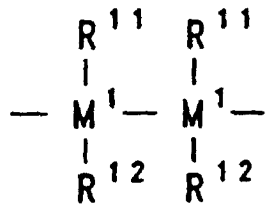 , 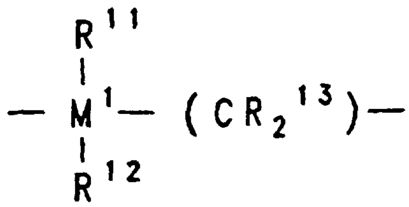 ,

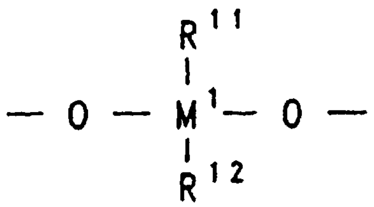 , 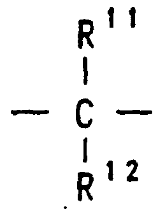 , 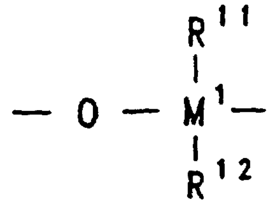 ,

$=BR^{11}$, $=AlR^{11}$, -Ge-, -Sn-, -O-, -S-, =SO, $=SO_2$, $=NR^{11}$, =CO, $=PR^{11}$ oder = $P(O)R^{11}$ ist,

wobei

$R^{11}$, $R^{12}$ und $R^{13}$ gleich oder verschieden sind und ein Wasserstoffatom, ein Halogenatom, eine $C_1$-$C_{20}$-Alkylgruppe, $C_1$-$C_{20}$-Fluoralkylgruppe, eine $C_6$-$C_{30}$-Arylgruppe, eine $C_6$-$C_{30}$-Fluorarylgruppe, eine $C_1$-$C_{20}$-Alkoxygruppe, eine $C_2$-$C_{20}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten, oder $R^{11}$ und $R^{12}$ oder $R^{11}$ und $R^{13}$ zusammen mit den sie verbindenden Atomen einen Ring bilden,

$M^1$ Silizium, Germanium oder Zinn ist,

$R^8$ und $R^9$ gleich oder verschieden sind und ein Wasserstoffatom, ein Halogenatom, eine $C_1$-$C_{20}$-Alkylgruppe, eine $C_1$-$C_{20}$-Fluoralkylgruppe, eine $C_6$-$C_{30}$-Arylgruppe, eine $C_6$-$C_{30}$-Fluorarylgruppe, eine $C_1$-$C_{20}$-Alkoxygruppe, eine $C_2$-$C_{20}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten, oder $R^8$ und $R^9$ zusammen mit den sie verbindenden Atomen einen Ring bilden,

m und n gleich oder verschieden sind und null, 1 oder 2 sind, wobei m plus n null, 1 oder 2 ist, dadurch gekennzeichnet, daß die beiden Indenylliganden voneinander verschiedene Substitutionsmuster aufweisen.

Alkyl steht für geradkettiges oder verzweigtes Alkyl. Halogen (halogeniert) bedeutet Fluor, Chlor, Brom oder Jod, bevorzugt Fluor oder Chlor. Reste mit gleicher Indizierung können unterschiedlich sein.

$M^2$ ist ein Metall der Gruppe IVb, Vb oder VIb des Periodensystems, beispielsweise Titan, Zirkon, Vanadin, Niob, Tantal, Chrom, Molybdän, Wolfram, vorzugsweise Zirkon, Hafnium, Titan, besonders bevorzugt Zirkon.

Die Reste $R^1$ sind gleich oder verschieden, bevorzugt gleich, und bedeuten ein Wasserstoffatom, eine

$C_1$-$C_{10}$-, vorzugsweise $C_1$-$C_3$-Alkylgruppe, eine $C_1$-$C_{10}$-, vorzugsweise $C_1$-$C_3$-Alkaxygruppe, eine $C_6$-$C_{10}$-, vorzugsweise $C_6$-$C_8$-Arylgruppe, eine $C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

Die Reste $R^2$ sind gleich oder verschieden, bevorzugt gleich, und bedeuten ein Wasserstoffatom, ein Halogenatom, bevorzugt ein Fluor-, Chlor- oder Bromatom, eine $C_1$-$C_{10}$-, vorzugsweise $C_1$-$C_4$-Alkylgruppe, die halogeniert sein kann, eine $C_6$-$C_{10}$-, vorzugsweise $C_6$-$C_8$-Arylgruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe, einen $-NR_2^{10}$, $-SR^{10}$, $-OSiR_3^{10}$, $-OR^{10}$, $-SiR_3^{10}$ oder $-PR_2^{10}$-Rest, worin $R^{10}$ ein Halogenatom, vorzugsweise Chloratom, oder eine $C_1$-$C_{10}$-, vorzugsweise $C_1$-$C_3$-Alkylgruppe oder $C_6$-$C_{10}$-, vorzugsweise $C_6$-$C_8$-Arylgruppe ist, besonders bevorzugt sind beide Reste $R^2$ Wasserstoff.

Die Reste $R^3$ sind jeweils gleich oder verschieden und bedeuten ein Wasserstoffatom, ein Halogenatom, eine $C_1$-$C_{20}$-, vorzugsweise $C_1$-$C_{10}$-Alkylgruppe, eine $C_1$-$C_{20}$-Fluoralkylgruppe, vorzugsweise $C_1$-$C_{10}$-Fluoralkyl-Gruppe, eine $C_6$-$C_{30}$-, vorzugsweise $C_6$-$C_{20}$-Arylgruppe, eine $C_6$-$C_{30}$-Fluorarylgruppe, vorzugsweise eine $C_6$-$C_{20}$-Fluorarylgruppe, eine $C_1$-$C_{20}$-, vorzugsweise $C_1$-$C_{10}$-Alkoxygruppe, eine $C_2$-$C_{20}$-, vorzugsweise $C_2$-$C_{10}$-Alkenylgruppe, eine $C_7$-$C_{40}$-, vorzugsweise $C_7$-$C_{20}$-Arylalkylgruppe, eine $C_8$-$C_{40}$-, vorzugsweise $C_8$-$C_{22}$-Arylalkenylgruppe, eine $C_7$-$C_{40}$-, vorzugsweise $C_7$-$C_{22}$-Alkylarylgruppe, einen $-NR_2^{10}$, $-SR^{10}$, $-OSiR_3^{10}$, $-OR^{10}$, $-SiR_3^{10}$ oder $-PR_2^{10}$-Rest, worin $R^{10}$ ein Halogenatom, vorzugsweise Chloratom, oder eine $C_1$-$C_{10}$-, vorzugsweise $C_1$-$C_3$-Alkylgruppe oder $C_6$-$C_{10}$-, vorzugsweise $C_6$-$C_8$-Arylgruppe ist, oder zwei oder mehr Reste $R^3$ bilden zusammen mit den sie verbindenden Atomen ein Ringsystem, welches ein- oder mehrkernig ist.

Die Reste $R^4$ sind jeweils gleich oder verschieden und bedeuten ein Wasserstoffatom, ein Halogenatom, eine $C_1$-$C_{20}$-, vorzugsweise $C_1$-$C_{10}$-Alkylgruppe, eine $C_1$-$C_{20}$-Fluoralkylgruppe, vorzugsweise $C_1$-$C_{10}$-Fluoralkyl-Gruppe, eine $C_6$-$C_{30}$-, vorzugsweise $C_6$-$C_{20}$-Arylgruppe, eine $C_6$-$C_{30}$-Fluorarylgruppe, vorzugsweise eine $C_6$-$C_{20}$-Fluorarylgruppe, eine $C_1$-$C_{20}$-, vorzugsweise $C_1$-$C_{10}$-Alkoxygruppe, eine $C_2$-$C_{20}$-, vorzugsweise $C_2$-$C_{10}$-Alkenylgruppe, eine $C_7$-$C_{40}$-, vorzugsweise $C_7$-$C_{20}$-Arylalkylgruppe, eine $C_8$-$C_{40}$-, vorzugsweise $C_8$-$C_{22}$-Arylalkenylgruppe, eine $C_7$-$C_{40}$-, vorzugsweise $C_7$-$C_{22}$-Alkylarylgruppe, einen $-NR_2^{10}$, $-SR^{10}$, $-OSiR_3^{10}$, $-OR^{10}$, $-SiR_3^{10}$ oder $-PR_2^{10}$-Rest, worin $R^{10}$ ein Halogenatom, vorzugsweise Chloratom, oder eine $C_1$-$C_{10}$-, vorzugsweise $C_1$-$C_3$-Alkylgruppe oder $C_6$-$C_{10}$-, vorzugsweise $C_6$-$C_8$-Arylgruppe ist, oder zwei oder mehr Reste $R^4$ bilden zusammen mit den sie verbindenden Atomen ein Ringsystem, welches ein- oder mehrkernig ist.

$R^5$ bedeutet ein Halogenatom, bevorzugt ein Fluor-, Chlor- oder Bromatom, eine $C_1$-$C_{10}$-, vorzugsweise $C_1$-$C_4$-Alkylgruppe, die halogeniert sein kann, eine $C_6$-$C_{10}$-, vorzugsweise $C_6$-$C_8$-Arylgruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe, einen $-NR_2^{10}$, $-SR^{10}$, $-OSiR_3^{10}$, $-OR^{10}$, $-SiR_3^{10}$ oder $-PR_2^{10}$-Rest, worin $R^{10}$ ein Halogenatom, vorzugsweise Chloratom, oder eine $C_1$-$C_{10}$-, vorzugsweise $C_1$-$C_3$-Alkylgruppe oder $C_6$-$C_{10}$-, vorzugsweise $C_6$-$C_8$-Arylgruppe ist.

$R^6$ bedeutet ein Wasserstoffatom, ein Halogenatom, bevorzugt ein Fluor-, Chloroder Bromatom, eine $C_1$-$C_{10}$-, vorzugsweise $C_1$-$C_4$-Alkylgruppe, die halogeniert sein kann, eine $C_6$-$C_{10}$-, vorzugsweise $C_6$-$C_8$-Arylgruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe, einen $-NR_2^{10}$, $-SR^{10}$, $-OSiR_3^{10}$, $-OR^{10}$, $-SiR_3^{10}$ oder $-PR_2^{10}$-Rest, worin $R^{10}$ ein Halogenatom, vorzugsweise Chloratom, oder eine $C_1$-$C_{10}$-, vorzugsweise $C_1$-$C_3$-Alkylgruppe oder $C_6$-$C_{10}$-, vorzugsweise $C_6$-$C_8$-Arylgruppe ist.

$R^7$ ist

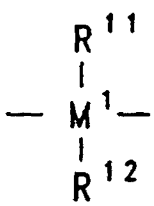 , 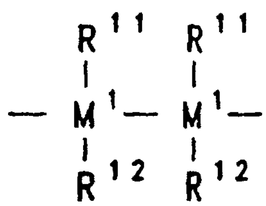 , 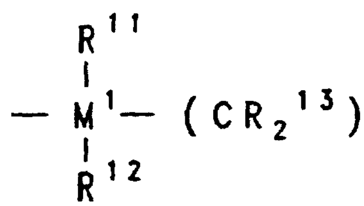 ,

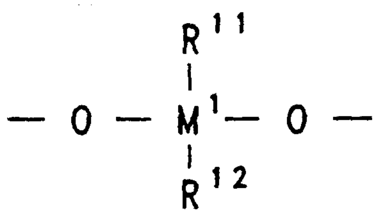, 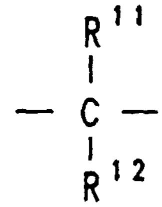, 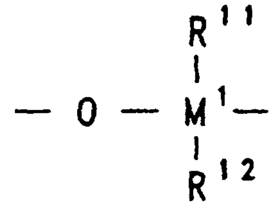,

$=BR^{11}$, $=AlR^{11}$, -Ge-, -Sn-, -O-, -S-, =SO, $=SO_2$, $=NR^{11}$, =CO, $=PR^{11}$ oder $=P(O)R^{11}$,

wobei $R^{11}$, $R^{12}$ und $R^{13}$ gleich oder verschieden sind und ein Wasserstoffatom, ein Halogenatom, eine $C_1$-$C_{20}$-, vorzugsweise $C_1$-$C_{10}$-Alkylgruppe, eine $C_1$-$C_{20}$-Fluoralkylgruppe, vorzugsweise $C_1$-$C_{10}$-Fluoralkylgruppe, eine $C_6$-$C_{30}$-, vorzugsweise $C_6$-$C_{20}$-Arylgruppe, eine $C_6$-$C_{30}$-Fluorarylgruppe, vorzugsweise eine $C_6$-$C_{20}$-Fluorarylgruppe, eine $C_1$-$C_{20}$-, vorzugsweise $C_1$-$C_{10}$-Alkoxygruppe, eine $C_2$-$C_{20}$-, vorzugsweise $C_2$-$C_{10}$-Alkenylgruppe, eine $C_7$-$C_{40}$-, vorzugsweise $C_7$-$C_{20}$-Arylalkylgruppe, eine $C_8$-$C_{40}$-, vorzugsweise $C_8$-$C_{22}$-Arylalkenylgruppe oder eine $C_7$-$C_{40}$-, vorzugsweise $C_7$-$C_{22}$-Alkylarylgruppe bedeuten, oder $R^{11}$ und $R^{12}$ oder $R^{11}$ und $R^{13}$ bilden zusammen mit den sie verbindenden Atomen einen Ring.

$M^1$ ist Silizium, Germanium oder Zinn, bevorzugt Silizium und Germanium.

$R^7$ ist vorzugsweise $=CR^{11}R^{12}$, $=SiR^{11}R^{12}$, $=GeR^{11}R^{12}$, -O-, -S-, =SO, $=PR^{11}$ oder $=P(O)R^{11}$.

$R^8$ und $R^9$ sind gleich oder verschieden und sind ein Wasserstoffatom, ein Halogenatom, eine $C_1$-$C_{20}$-, vorzugsweise $C_1$-$C_{10}$-Alkylgruppe, eine $C_1$-$C_{20}$-Fluoralkylgruppe, vorzugsweise $C_1$-$C_{10}$-Fluoralkylgruppe, eine $C_6$-$C_{30}$-, vorzugsweise $C_6$-$C_{20}$-Arylgruppe, eine $C_6$-$C_{30}$-Fluorarylgruppe, vorzugsweise eine $C_6$-$C_{20}$-Fluorarylgruppe, eine $C_1$-$C_{20}$-, vorzugsweise $C_1$-$C_{10}$-Alkoxygruppe, eine $C_2$-$C_{20}$-, vorzugsweise $C_2$-$C_{10}$-Alkenylgruppe, eine $C_7$-$C_{40}$-, vorzugsweise $C_7$-$C_{20}$-Arylalkylgruppe, eine $C_8$-$C_{40}$-, vorzugsweise $C_8$-$C_{22}$-Arylalkenylgruppe oder eine $C_7$-$C_{40}$-, vorzugsweise $C_7$-$C_{22}$-Alkylarylgruppe bedeuten, oder $R^8$ und $R^9$ bilden jeweils zusammen mit den sie verbindenden Atomen einen Ring.

m und n sind gleich oder verschieden und bedeuten null, 1 oder 2, bevorzugt null oder 1, wobei m plus n null, 1 oder 2, bevorzugt null oder 1 ist.

Die beiden Indenylliganden weisen voneinander verschiedene Substitutionsmuster, insbesondere am Sechsring, auf.

Bevorzugt sind Bisindenylliganden der Formel IV, worin die Reste $R^3$ ein Wasserstoffatom, eine $C_1$-$C_{20}$-Alkylgruppe oder eine $C_6$-$C_{30}$-Arylgruppe bedeuten, oder zwei oder mehr Reste $R^3$ zusammen mit den sie verbindenden Atomen ein Ringsystem bilden, die Reste $R^4$ ein Wasserstoffatom, eine $C_1$-$C_{20}$-Alkylgruppe oder eine $C_6$-$C_{30}$-Arylgruppe bedeuten, oder zwei oder mehr Reste $R^4$ zusammen mit den sie verbindenden Atomen ein Ringsystem bilden, $R^5$ eine $C_1$-$C_{10}$-, vorzugsweise $C_1$-$C_4$-Alkylgruppe ist, $R^6$ ein Wasserstoffatom oder eine $C_1$-$C_{10}$-, vorzugsweise $C_1$-$C_4$-Alkylgruppe, ist, $R^7$ einen Rest

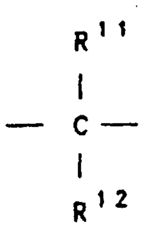, 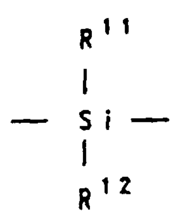 oder 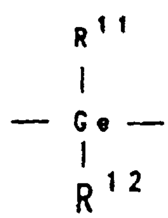,

bevorzugt

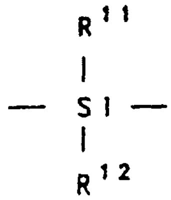 oder 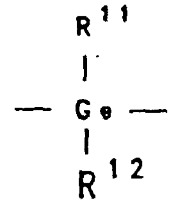,

bedeutet, worin $R^{11}$ und $R^{12}$ gleich oder verschieden sind und eine $C_1$-$C_{20}$-Alkylgruppe oder eine $C_6$-$C_{30}$-Arylgruppe sind, $R^8$ und $R^9$ gleich oder verschieden sind und ein Wasserstoffatom, eine $C_1$-$C_{20}$-Alkylgruppe oder eine $C_6$-$C_{30}$-Arylgruppe sind und m plus n null oder 1 ist, insbesondere solche Verbindungen der Formel IV, bei denen zumindest einer der beiden Indenylliganden in 2-, 2,4-, 2,5-, 2,6-, 2,4,6-, 2,4,5-, 2,4,5,6- oder 2,5,6-Stellung Substituenten ungleich Wasserstoff aufweist.

Besonders bevorzugte Verbindungen der Formel IV bestehen aus folgenden Molekülfragmenten a, b, c:

a) $-(CR^8R^9)_m-R^7-(CR^8R^9)_n-$ ist gleich Dialkylsilandiyl, Alkyl(aryl)silandiyl, 1,2-Ethandiyl, 1,2-Butandiyl, Diarylsilandiyl, Dialkylmethylen, Diarylmethylen, Alkyl(aryl)methylen, Alkyl(vinyl)silandiyl, Aryl(vinyl)silandiyl oder Dialkylgermyl.

b) $R^3{}_4R^2R^5$-1-indenyl ist gleich 2-Alkyl-4-aryl-1-indenyl, 2,4-Dialkyl-1-indenyl, 2,4,6-Trialkyl-1-indenyl, 2-Alkyl-4,5-benzo-1-indenyl, 2,5-Dialkyl-1-indenyl, 2,5,6-Trialkyl-1-indenyl, 2,4,5-Trialkyl-1-indenyl, 2-Alkyl-1-indenyl, 2-Aryl-1-indenyl, 2,6-Alkyl-4-aryl-1-indenyl, 2-Alkyl-5-aryl-1-indenyl, 2-Alkyl-5,6-diaryl-1-indenyl, 2-Alkyl-4,5-diaryl-1-indenyl oder 2-Alkyl-4,6-diaryl-1-indenyl.

c) $R^4{}_4R^2R^6$-1-indenyl ist gleich 2-Alkyl-4-aryl-1-indenyl, 2,4-Dialkyl-1-indenyl, 2,4,6-Trialkyl-1-indenyl, 2-Alkyl-4,5-benzo-1-indenyl, 2,5-Dialkyl-1-indenyl, 2,5,6-Trialkyl-1-indenyl, 2,4,5-Trialkyl-1-indenyl, 2-Alkyl-1-indenyl, 2-Aryl-1-indenyl, 2,6-Alkyl-4-aryl-1-indenyl, 2-Alkyl-5-aryl-1-indenyl, 2-Alkyl-5,6-diaryl-1-indenyl, 2-Alkyl-4,5-diaryl-1-indenyl, 2-Alkyl-4,6-diaryl-1-indenyl oder 1-indenyl.

Beispiele für die Verbindungen der Formel I sind:

Dimethyl-silandiyl(2-methyl-4,5-benzo-1-indenyl)(2-ethyl-4-phenyl-1-indenyl)$ZrCl_2$,
Dimethyl-silandiyl(2,5,6-trimethyl-1-indenyl)(2-ethyl-4-phenyl-1-indenyl)$ZrCl_2$,
Dimethyl-silandiyl(2-ethyl-1-indenyl)(1-indenyl)$ZrCl_2$,
Dimethyl-silandiyl(2-methyl-4,6-diisopropyl-1-indenyl)(2-methyl-4-phenyl-1-indenyl)$ZrCl_2$,
Dimethyl-silandiyl(2,4,6-trimethyl-1-indenyl)(2-methyl-4-phenyl-1-indenyl)$ZrCl_2$,
Dimethyl-silandiyl(2-methyl-4-isopropyl-1-indenyl)(2-methyl-4-phenyl-1-indenyl)$ZrCl_2$,
Dimethyl-silandiyl(2-methyl-α-acenaphth-1-indenyl)(2-methyl-4-phenyl-1-indenyl)$ZrCl_2$,
Dimethyl-silandiyl(2-methyl-4,5-benzo-1-indenyl)(2-methyl-4-phenyl-1-indenyl)$ZrCl_2$,
Dimethyl-silandiyl(2-methyl-5-isobutyl-1-indenyl)(2-methyl-4-phenyl-1-indenyl)$ZrCl_2$,
Dimethyl-silandiyl(2,5,6-trimethyl-1-indenyl)(2-methyl-4-phenyl-1-indenyl)$ZrCl_2$,
Dimethyl-silandiyl(4-phenyl-1-indenyl)(2-methyl-4-phenyl-1-indenyl)$ZrCl_2$,
Dimethyl-silandiyl(2-methyl-4,6-diisopropyl-1-indenyl)(2-methyl-4,5-benzo-1-indenyl)$ZrCl_2$,
Dimethyl-silandiyl(2,4, 6-trimethyl-1-indenyl)(2-methyl-4,5-benzo-1-indenyl)$ZrCl_2$,
Dimethyl-silandiyl(2-methyl-4-isopropyl-1-indenyl)(2-methyl-4,5-benzo-1-indenyl)$ZrCl_2$,
Dimethyl-silandiyl(2-methyl-α-acenaphth-1-indenyl)(2-methyl-4,5-benzo-1-indenyl)$ZrCl_2$,
Dimethyl-silandiyl(4,5-benzo-1-indenyl)(2-methyl-4,5-benzo-1-indenyl)$ZrCl_2$,
Dimethyl-silandiyl(2,5,6-trimethyl-1-indenyl)(2-methyl-4,5-benzo-1-indenyl)$ZrCl_2$,
Dimethyl-silandiyl(4,6-dimethyl-1-indenyl)(2,4,6-trimethyl-1-indenyl)$ZrCl_2$,
Dimethyl-silandiyl(2-methyl-4-isopropyl-1-indenyl)(2,4,6-trimethyl-1-indenyl)$ZrCl_2$,
Dimethyl-silandiyl(2-methyl-α-acenaphth-1-indenyl)(2,4,6-trimethyl-1-indenyl)$ZrCl_2$,
Dimethyl-silandiyl(2-methyl-4,6-diisopropyl-1-indenyl)(2,4,6-trimethyl-1-indenyl)$ZrCl_2$,
Dimethyl-silandiyl(2,5,6-trimethyl-1-indenyl)(2,4,6-trimethyl-1-indenyl)$ZrCl_2$,
Dimethyl-silandiyl(2,4,6-trimethyl-1-indenyl)(2-methyl-4,6-diisopropyl-1-indenyl)$ZrCl_2$,
Dimethyl-silandiyl(2-methyl-4-isopropyl-1-indenyl)(2-methyl-4,6-diisopropyl-1-indenyl)$ZrCl_2$,
Dimethyl-silandiyl(2-methyl-α-acenaphth-1-indenyl)(2-methyl-4,6-diisopropyl-1-indenyl)$ZrCl_2$,
Dimethyl-silandiyl(2-methyl-4-phenyl-1-indenyl)(1-indenyl)$ZrCl_2$,
Dimethyl-silandiyl(2-methyl-4-phenyl-1-indenyl)(2-methyl-1-indenyl)$ZrCl_2$,
Dimethyl-silandiyl(2-ethyl-4-phenyl-1-indenyl)(2-methyl-1-indenyl)$ZrCl_2$,
Dimethyl-silandiyl(2-methyl-4(1-naphthyl)-1-indenyl)(2-methyl-1-indenyl)$ZrCl_2$,
Dimethyl-silandiyl(2-methyl-4,6-diisopropyl-1-indenyl)(2-methyl-1-indenyl)$ZrCl_2$,
Dimethyl-silandiyl(2,4,6-trimethyl-1-indenyl)(2-methyl-1-indenyl)$ZrCl_2$,
Dimethyl-silandiyl(2-methyl-4-isopropyl-1-indenyl)(2-methyl-1-indenyl)$ZrCl_2$,
Dimethyl-silandiyl(2-methyl-α-acenaphth-1-indenyl)(2-methyl-1-indenyl)$ZrCl_2$,
Dimethyl-silandiyl(2-methyl-4,5-benzo-1-indenyl)(2-methyl-1-indenyl)$ZrCl_2$,
Dimethyl-silandiyl(2-methyl-5-isobutyl-1-indenyl)(2-methyl-1-indenyl)$ZrCl_2$,

Dimethyl-silandiyl(2,5,6-trimethyl-1-indenyl)(2-methyl-1-indenyl)$ZrCl_2$,
Phenyl(Methyl)silandiyl(2-methyl-4-phenyl-1-indenyl)(2-methyl-1-indenyl)$ZrCl_2$,
Diphenylsilandiyl(2-methyl-4-phenyl-1-indenyl)(2-methyl-1-indenyl)$ZrCl_2$,
1,2-Ethandiyl(2-methyl-4-phenyl-1-indenyl)(2-methyl-1-indenyl)$ZrCl_2$,
1,2-Butandiyl(2-methyl-4-phenyl-1-indenyl)(2-methyl-1-indenyl)$ZrCl_2$,
Dimethylgermyl(2-methyl-4-phenyl-1-indenyl)(2-methyl-1-indenyl)$ZrCl_2$,
Methyl(vinyl)silandiyl(2-methyl-4-phenyl-1-indenyl)(2-methyl-1-indenyl)$ZrCl_2$,
Phenyl(vinyl)silandiyl(2-methyl-4-phenyl-1-indenyl)(2-methyl-1-indenyl)$ZrCl_2$,
Dimethylsilandiyl(2-methyl-4-phenyl-1-indenyl)(2-ethyl-4-phenyl-1-indenyl)$ZrCl_2$,
Dimethylsilandiyl(2-methyl-4(1-naphthyl)-1-indenyl)(2-ethyl-4-phenyl-1-indenyl)$ZrCl_2$,
Dimethylsilandiyl(2-methyl-4,6-diisopropyl-1-indenyl)(2-ethyl-4-phenyl-1-indenyl)$ZrCl_2$,
Dimethylsilandiyl(2,4,6-trimethyl-1-indenyl)(2-ethyl-4-phenyl-1-indenyl)$ZrCl_2$,
Dimethylsilandiyl(2-methyl-4(1-naphthyl)-1-indenyl)(2-methyl-4-phenyl-1-indenyl)$ZrCl_2$,
Dimethylsilandiyl(2,5,6-trimethyl-1-indenyl)(2-ethyl-4-phenyl-1-indenyl)$ZrCl_2$,
Dimethylsilandiyl(2-methyl-4-isopropyl-1-indenyl)(2-ethyl-4-phenyl-1-indenyl)$ZrCl_2$,
Dimethylsilandiyl(α-acenaphth-1-indenyl)(2-ethyl-4-phenyl-1-indenym)$ZrCl_2$ und
Dimethyisilandiyl(2,5,6-trimethyl-1-indenyl)(2-ethyl-4-phenyl-1-indenyl)$ZrCl_2$,
Dimethylsilandiyl(2-methyl-4,6-diisopropyl-1-indenyl)(1-indenyl)$ZrCl_2$
Dimethylsilandiyl(2,4,6-trimethyl-1-indenyl)(1-indenyl)$ZrCl_2$
Dimethylsilandiyl(2-methyl-4-isopropyl-1-indenyl)(1-indenyl)$ZrCl_2$
Dimethylsilandiyl(2-methyl-4-isobutyl-1-indenyl)(1-indenyl)$ZrCl_2$
Dimethylsilandiyl(2,4-dimethyl-1-indenyl)(1-indenyl)$ZrCl_2$
Dimethylsilandiyl(2,5,6-trimethyl-1-indenyl)(1-indenyl)$ZrCl_2$
Dimethylsilandiyl(2-methyl-α-acenaphth-1-indenyl)(1-indenyl)$ZrCl_2$
Dimethylsilandiyl(2-methyl-4,5-benzo-1-indenyl)(1-indenyl)$ZrCl_2$
Dimethylsilandiyl(2-methyl-5-isobutyl-1-indenyl)(1-indenyl)$ZrCl_2$
Dimethylsilandiyl(2-ethyl-4-(1-naphthyl)-1-indenyl)(1-indenyl)$ZrCl_2$
Dimethylsilandiyl(2-methyl-1-indenyl)(1-indenyl)$ZrCl_2$
Dimethylsilandiyl(2-methyl-4-phenyl-1-indenyl)(1-indenyl)$ZrCl_2$
Dimethylsilandiyl(2-ethyl-4-phenyl-1-indenyl)(1-indenyl)$ZrCl_2$
Dimethylsilandiyl(2-methyl-4-(1-naphthyl)-1-indenyl)(1-indenyl)$ZrCl_2$
Diethylgermyl(2-methyl-4-(1-naphthyl)-1-indenyl)(1-indenyl)$ZrCl_2$

Die Trennung der Stereoisomeren ist im Prinzip bekannt.

Die Metallocene der Formel I können prinzipiell nach folgendem Reaktionsschema hergestellt werden:

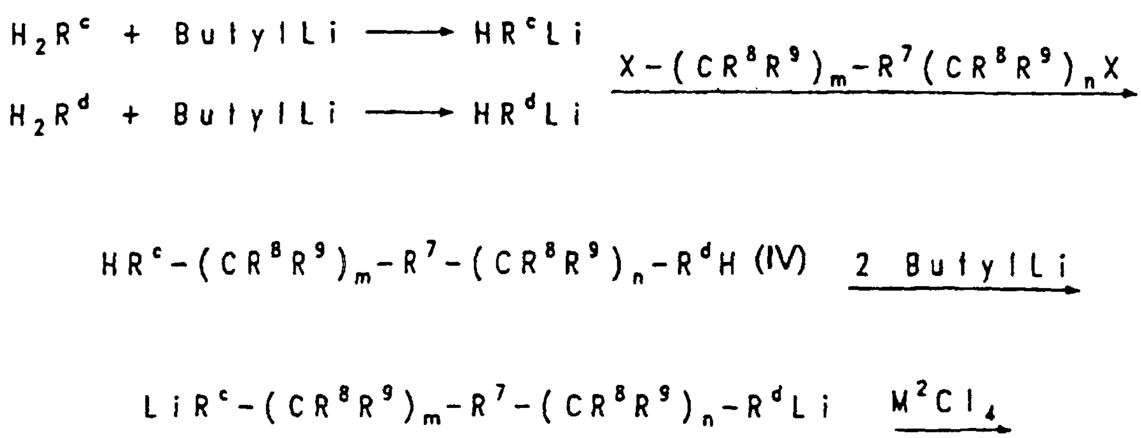

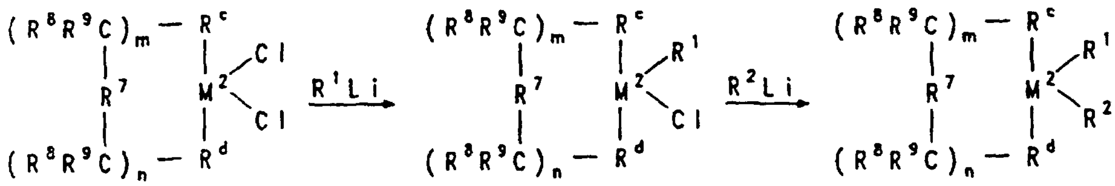


X = Cl, Br, I, O-Tosyl;

$H_2R^c$ = 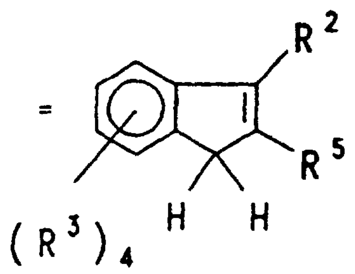 , $H_2R^d$ = 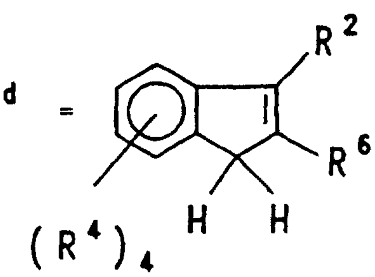

oder

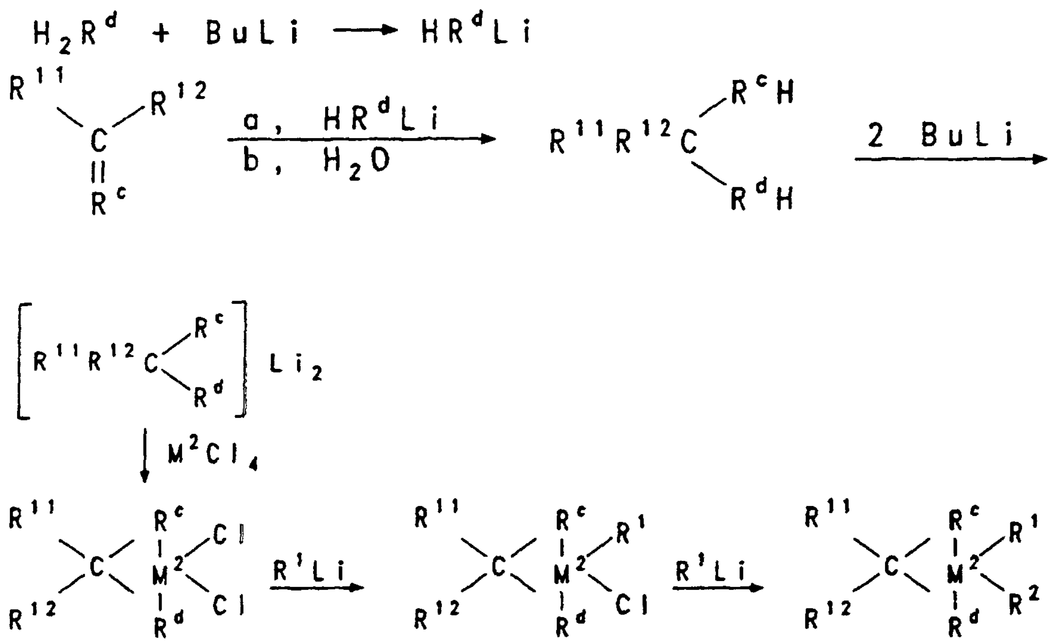


(vgl. Journal of Organomet. Chem. (1985) Seiten 63-67 und EP-A 320762).

Ein Verfahren zur Herstellung eines Olefinpolymers durch Polymerisation mindestens eines Olefins in Gegenwart eines Katalysators, welcher mindestens ein Metallocen als Übergangsmetallverbindung und mindestens einen Cokatalysator enthält, dadurch gekennzeichnet, daß das Metallocen eine Verbindung der Formel I ist. wird nachfolgend beschrieben

Die Polymerisation kann eine Homopolymerisation oder eine Copolymerisation sein. Bevorzugt werden Olefine der Formel $R^a$-CH =CH-$R^b$ homo- oder copolymerisiert, worin $R^a$ und $R^b$ gleich oder verschieden sind und ein Wasserstoffatom oder einen Kohlenwasserstoffrest mit 1 bis 20 C-Atomen, insbesondere 1 bis 10 C-Atome, bedeuten, oder $R^a$ und $R^b$ zusammen mit den sie verbindenden Atomen einen oder mehrere Ringe bilden. Beispiele für solche

Olefine sind 1-Olefine wie Ethylen, Propylen, 1-Buten, 1-Penten, 1-Hexen, 4-Methyl-1-penten oder 1-Octen, Styrol, Diene wie 1,3-Butadien oder 1,4-Hexadien und cyclische Olefine wie Norbornen, Tetracyclododecen, Norbornadien oder Vinylnorbornen.

Bevorzugt wird in dem Polymerisationsverfahren Ethylen oder Propylen homopolymerisiert, oder Ethylen mit einem oder mehreren 1-Olefinen mit 3-20 C-Atomen, wie Propylen, und/oder einem oder mehreren Dienen mit 4-20 C-Atomen, wie 1,3-Butadien, copolymerisiert. Beispiele von Copolymeren sind Ethylen/Propylen-Copolymere, Ethylen/Propylen/1,4-Hexadien-Copolymere,Ethylen/Propylen/5-Ethyliden-2-Norbornen-CopolymereoderEthylen-Norbornen-Copolymere.

Das Polymerisationsverfahren eignet sich insbesondere zur Herstellung isotaktischer Olefinpolymere.

Die Polymerisation wird bevorzugt bei einer Temperatur von 0 bis 200°C, besonders bevorzugt 50 bis 80°C durchgeführt. Der Druck beträgt bevorzugt 0,5 bis 100 bar, insbesondere 5 bis 64 bar.

Die Polymerisation kann in Lösung, in Suspension oder in der Gasphase, kontinuierlich oder diskontinuierlich, ein- oder mehrstufig durchgeführt werden.

Bevorzugt enthält der in dem Polymerisationsverfahren eingesetzte Katalysator ein Metallocen und einen Cokatalysator. Es können auch Mischungen von zwei oder mehr Metallocenen eingesetzt werden, insbesondere zur Herstellung von Polyolefinen mit breiter oder multimodaler Molmassenverteilung.

Prinzipiell ist als Cokatalysator in dem Polymerisationsverfahren jede Verbindung geeignet, die aufgrund ihrer Lewis-Acidität das neutrale Metallocen in ein Kation überführen und dieses stabilisieren kann ("labile Koordination"), Darüber hinaus soll der Cokatalysator oder das aus ihm gebildete Anion keine weiteren Reaktionen mit dem gebildeten Metallocenkation eingehen (EP 427 697). Als Cokatalysator werden bevorzugt Aluminium- und/oder Borverbindungen verwendet.

Als Aluminiumverbindung wird in dem Polymerisationsverfahren bevorzugt ein Aluminoxan, insbesondere der Formel II

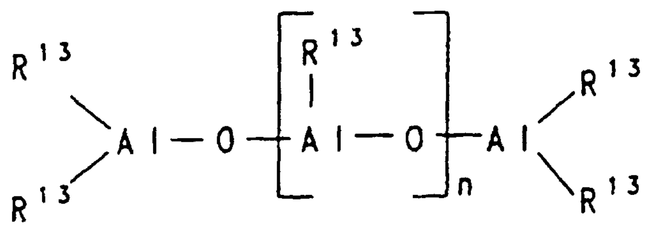

(II)

für den linearen Typ und/oder der Formel III

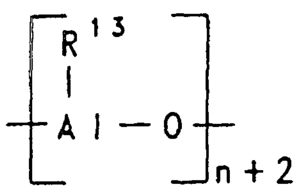

(III)

für den cyclischen Typ eingesetzt, wobei in den Formeln II und III die Reste $R^{13}$ gleich oder verschieden sein können und eine $C_1$-$C_6$-Alkylgruppe, eine $C_1$-$C_6$-Fluoralkylgruppe, eine $C_6$-$C_{18}$-Arylgruppe, eine $C_1$-$C_6$-Fluorarylgruppe oder Wasserstoff bedeuten und n eine ganze Zahl von 0 bis 50 ist, oder anstelle des Aluminoxans eine Mischung eines Aluminoxans mit einer Verbindung $AlR^{14}_3$, worin $R^{14}$ die gleiche Bedeutung wie $R^{13}$ hat, eingesetzt wird.

Bevorzugt sind die Reste $R^{13}$ gleich und bedeuten Methyl, Isobutyl, Phenyl oder Benzyl, besonders bevorzugt Methyl.

Sind die Reste $R^{13}$ unterschiedlich, so sind sie bevorzugt Methyl und Wasserstoff oder alternativ Methyl und Isobutyl, wobei Wasserstoff bzw. Isobutyl bevorzugt mit einem Anteil von zu 0,01 bis 40 % (der Reste $R^{13}$) enthalten sind. Statt des Aluminoxans kann bei der Polymerisation als Cokatalysator eine Mischung bestehend aus Aluminoxan und $AlR^{14}_3$ verwendet werden, wobei $R^{14}$ die Bedeutung von $R^{13}$ hat. Bevorzugt ist $R^{14}$ Methyl, Ethyl, Isobutyl, Phenyl oder Benzyl.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen $R^{13}$ werden entsprechend der gewünschten Zusammensetzung zwei verschiedene Aluminiumtrialkyle ($AlR^{13}_3$ + $AlR'^{13}_3$) mit Wasser umgesetzt (vgl. S. Pasynkiewicz, Polyhedron 9 (1990) 429 und EP-A 302 424).

Die genaue räumliche Struktur der Aluminoxane ist nicht bekannt (A.R. Barron et al., J. Am. Chem. Soc. 115 (1993) 4971). Beispielsweise ist auch denkbar, daß sich Ketten oder Ringe zu größeren zweidimensionalen oder dreidimensionalen Strukturen verbinden.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die Metallocene vor dem Einsatz in der Polymerisationsreaktion mit einem Cokatalysator, insbesondere Aluminoxan vorzuaktivieren. Dadurch wird die Polymerisationsaktivität deutlich erhöht und die Kornmorphologie verbessert.

Die Voraktivierung der Metallocene wird in Lösung vorgenommen. Bevorzugt werden dabei die Metallocene als Feststoff in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol oder ein $C_6$-$C_{10}$-Kohlenwasserstoff verwendet.

Die Konzentration des Aluminoxans in der Lösung liegt bevorzugt im Bereich von ca. 1 Gew.-% bis zur Sättigungsgrenze, vorzugsweise von 5 bis 30 Gew.-%, jeweils bezogen auf die Gesamtlösung. Die Metallocene können in der gleichen Konzentration eingesetzt werden, vorzugsweise werden sie jedoch in einer Menge von $10^{-4}$ bis 1 mol pro mol Aluminoxan eingesetzt. Die Voraktivierungszeit beträgt 1 Minute bis 60 Stunden, vorzugsweise 2 bis 60 Minuten. Man arbeitet bei einer Temperatur von -78 bis 100°C, vorzugsweise 0 bis 70°C.

Das Metallocen kann (gegebenenfalls zusammen mit einem Cokatalysator) auf einen Träger aufgebracht und/oder vorpolymerisiert werden. Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan, Kombinationen von Aluminoxan auf einem Träger wie beispielsweise Silikagel, oder andere anorganische Trägermaterialien. Ein geeignetes Trägermaterial ist auch ein Polyolefinpulver in feinverteilter Form.

Eine weitere mögliche Ausgestaltung des Polymerisationsverfahrens besteht darin, daß man an Stelle oder neben eines Aluminoxans eine salzartige Borverbindung der Formel $R_xNH_{4-x}BR'_4$ oder der Formel $R_3PHBR'_4$ als Cokatalysator verwendet. Dabei sind x = 1, 2 oder 3, R = Alkyl oder Aryl, gleich oder verschieden, und R' = Aryl, das auch fluoriert oder teilfluoriert sein kann. In diesem Fall besteht der Katalysator aus dem Reaktionsprodukt der Metallocene mit einer der genannten Verbindungen (vgl. EP-A 277 004).

Zur Entfernung von im Olefin vorhandenen Katalysatorgiften ist eine Reinigung mit einem Aluminiumalkyl, beispielsweise $AlMe_3$ oder $AlEt_3$ vorteilhaft. Diese Reinigung kann sowohl im Polymerisationssystem selbst erfolgen, oder das Olefin wird vor der Zugabe in das Polymerisationssystem mit der Al-Verbindung in Kontakt gebracht und anschließend wieder abgetrennt.

Als Molmassenregler wird, falls erforderlich, Wasserstoff zugegeben. Die Zugabe des Wasserstoffs bewirkt eine zusätzliche starke Erhöhung der Polymerisationsaktivität.

Der Gesamtdruck im Polymerisationssystem beträgt 0,5 bis 100 bar. Bevorzugt ist die Polymerisation in dem technisch besonders interessanten Druckbereich von 5 bis 64 bar.

Die Metallocene werden bevorzugt in einer Konzentration, bezogen auf das Übergangsmetall, von $10^{-3}$ bis $10^{-8}$, vorzugsweise $10^{-4}$ bis $10^{-7}$ mol Übergangsmetall pro $dm^3$ Lösemittel bzw. pro $dm^3$ Reaktorvolumen angewendet. Der Cokatalysator, wie Aluminoxan oder eine Mischung Aluminoxan/$AlR^{14}_3$, wird bevorzugt in einer Konzentration von $10^{-5}$ bis $10^{-1}$ mol, vorzugsweise $10^{-4}$ bis $10^{-2}$ mol pro $dm^3$ Lösemittel bzw. pro $dm^3$ Reaktorvolumen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff, als solcher sei beispielsweise Propan, Butan, Pentan, Hexan, Heptan, Decan, Isooctan, Cyclohexan, Methylcyclohexan, genannt.

Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das den erfindungsgemäßen Bisindenylliganden enthaltende Katalysatorsystem einen nur geringen zeitabhängigen Abfall der Polymerisationsaktivität zeigt.

Die nach dem beschriebenen Verfahren hergestellten isotaktischen Polyolefine besitzen insbesondere Bedeutung für die Herstellung von Formkörpern wie Folien, Platten oder Großhohlkörpern (z.B. Rohre).

Das den erfindungsgemäßen Bisindenylliganden enthaltende Metallocen zeichnet sich dadurch aus, daß im technisch interessanten Temperaturbereich zwischen 50 und 100°C mit sehr hoher Polymerisationsaktivität Polymere

mit hoher Molmasse und hohem Schmelzpunkt erhalten werden.

Außerdem entsteht bei der Synthese des Metallocens keine meso-Form, so daß sich deren aufwendige Abtrennung erübrigt. Durch Kombination unterschiedlicher Liganden können Metallocenverbindungen zur Herstellung von Polyolefinen mit maßgeschneiderten Eigenschaften zur Verfügung gestellt werden.

Insbesondere in geträgerter Form führen die einen erfindungsgemäßen Bisindenylligand enthaltenden Metallocene zu Polyolefinen mit sehr guter Kornmorphologie.

Die nachfolgenden Beispiele sollen die Erfindung näher erläutern.

Es bedeuten:

VZ = Viskositätszahl in $cm^3/g$
$M_w$ = Molmassengewichtsmittel in g/mol (ermittelt mit GPC)
$M_w/M_n$ = Polydispersität (ermittelt mit GPC)
II = Isotaktisches Index (mm + ½ mr) (ermittelt mit $^{13}C$-NMR)
$n_{iso}$ = Isotaktische Blocklänge (ermittelt mit $^{13}C$-NMR)
$n_{syndio}$ = Syndiotaktische Blocklänge (ermittelt mit $^{13}C$-NMR)
MFI (230/2.16) Schmelzindex ermittelt nach DIN 53735 in dg/min
MFI (230/5) Schmelzindex ermittelt nach DIN 53735 in dg/min
Schmp. = Schmelzpunkt ermittelt durch DSC in °C (20°C/min Aufheiz- und Abkühlgeschwindigkeit
pr = "pseudo-rac": Bei pseudo-rac-Verbindungen liegen die Indenylligandgerüste in meso-Anordnung vor, durch die unterschiedliche Substitution der Indenylliganden liegt am Zentralatom $M^2$ jedoch ein Chiralitätszentrum vor, so daß die Verbindungen racemisch sind.

Alle Glasgeräte wurden im Vakuum ausgeheizt und mit Argon gespült. Alle Operationen wurden unter Ausschluß von Feuchtigkeit und Sauerstoff in Schlenkgefäßen durchgeführt. Die verwendeten Lösemittel wurde mit Ausnahme von Dichlormethan unter Argon von eine Na/K-Legierung abdestilliert.

Dichlormethan wurde unter Argon von $CaH_2$ abdestilliert.

Beispiel A

Dimethylsilandiyl(2-methyl-1-indenyl)(2-methyl-4-phenyl-1-indenyl)zirkondichlorid (1)

Zu einer Lösung von 15 g (73 mmol) 2-Methyl-7-phenyl-inden (die Herstellung ist in DE 4 221 244 beschrieben) in 150 ml Toluol und 7,5 ml $Et_2O$ wurden bei Raumtemperatur innerhalb von 30 Minuten 29 ml einer 2,5 M Lösung von Butyllithium in Hexan zugetropft und anschließend 2 Stunden bei 40°C nachgerührt. Die Suspension wurde anschließend bei Raumtemperatur zu einer Lösung von 35,3 ml (290 mmol) Dimethyldichlorsilan in 100 ml Toluol getropft und 3 Stunden bei Raumtemperatur nachgerührt. Das Lösemittel wurde im Vakuum entfernt und der Rückstand im Vakuum (0,1 Torr) getrocknet und anschließend in 200 ml Toluol aufgenommen. Zu dieser Lösung wurde bei Raumtemperatur eine Suspension von 2-Methyl-indenyl-lithium (hergestellt durch Umsetzung von 9,5 g (73 mmol) 2-Methyl-inden in 60 ml Toluol und 6 ml THF bei Raumtemperatur mit 29 ml einer 2,5 M Lösung von Butyllithium in Hexan und 1 Stunde Nachrühren bei 40°C) innerhalb von 50 Minuten zugetropft und anschließend noch 2 Stunden bei Raumtemperatur nachgerührt. Die Reaktionsmischung wurde mit 100 ml Wasser versetzt, die Phasen getrennt und die organische Phase mit 50 ml Wasser gewaschen. Die Lösemittel wurden im Vakuum entfernt und der Rückstand durch Chromatographie an 400 g Kieselgel (Hexan/Methylenchlorid 9:1) gereinigt. Neben 0,7 g Edukt wurden 16,1 g (67 %) des Ligandsystems von Verbindung 1 als farbloses Öl erhalten.

Zu einer Lösung von 8,0 g (20,4 mmol) des Ligandsystems von Verbindung 1 in 50 ml Toluol wurde bei 50°C innerhalb von 20 Minuten 15,2 ml (40,8 mmol) einer 20 %igen Lösung von Butyllithium in Toluol zugetropft und anschließend noch 2 Stunden bei 100°C nachgerührt. Nach beendeter Gasentwicklung wurde auf -40°C gekühlt und mit 4,75 g (20,4 mmol) $ZrCl_4$ versetzt und 1 Stunde bei Raumtemperatur nachgerührt. Es wurde erneut auf -40°C gekühlt, mit 2 ml THF versetzt und über eine G3-Schlenk-Fritte filtriert. Das Filtrat wurde auf die Hälfte eingeengt und bei -30°C kristallisieren lassen. Die überstehende Lösung wurde vom ausgefallenen Feststoff abpipettiert dreimal mit je 1 ml Toluol und je 5 ml Hexan gewaschen und anschließend getrocknet. Es wurden 3,4 g (30 %) der racemischen Form von Verbindung (1) als gelber Feststoff erhalten.

$^1H$-NMR (100 MHz, $CDCl_2$): 6,9 bis 7,8 (m, 14 H, arom. H und β-H), 2,1 (2 s, 6 H, $CH_3$), 1,2 (2 s, 6 H, $CH_3Si$). Massenspektrum: 550 $M^+$, korrektes Zerfallsmuster.

Nach Aufkonzentration des Filtrates und Kristallisation bei -30°C wurden weitere 2,8 g (25 %) der pseudo-rac-Form von Verbindung (1) als gelber Feststoff erhalten.

$^1H$-NMR (100 MHz, $CDCl_3$): 6,7 bis 7,7 (m, 14 H, arom. H und β-H-IndH), 2,4 (d, 6 H, $CH_3$); 1,4 und 1,2 (2 s, 6 H, $CH_3Si$).

Beispiel B

Dimethylsilandiyl(1-indenyl)(2-methyl-4-phenyl-1-indenyl)zirkondichiorid (2)

Zu einer Lösung von 26,1 g (87 mmol) Dimethyl(2-methyl-4-phenyl-inden) chlorisilan in 200 ml Toluol und 10 ml THF wurde bei Raumtemperatur eine Suspension von Indenyl-lithium (hergestellt durch Umsetzung von 10,1 g (87 mmol) Inden (90 %ig) in 100 ml Toluol und 5 ml THF bei Raumtemperatur mit 35 ml einer 2,5 M Lösung von Butyllithium in Hexan und 1 Stunde Nachrühren bei 40°C) innerhalb von 50 Minuten zugetropft und anschließend noch 2 Stunden bei Raumtemperatur nachgerührt. Die Reaktionsmischung wurde mit 100 ml $H_2O$ versetzt, die Phasen getrennt und die organische Phase mit 50 ml $H_2O$ gewaschen. Die Lösemittel wurden im Vakuum entfernt und der Rückstand durch Kristallisation (Hexan/Dichlormethan) gereinigt. Es wurden 18,8 g (56 %) des Ligandsystems von Verbindung 2 als farbloser Feststoff erhalten.

Zu einer Lösung von 10,0 g (26,4 mmol) des Ligandsystems von Verbindung 2 in 80 ml Toluol unter Argon wurde bei 50°C innerhalb von 20 Minuten 19,7 ml (52,8 mmol) einer 20 %igen Lösung von Butyllithium in Toluol zugetropft und anschließend noch 2 Stunden bei 100°C nachgerührt. Nach beendeter Gasentwicklung wurde auf -40°C gekühlt und mit 6,15 g (25,4 mmol) $ZrCl_4$ versetzt und 1 Stunde bei Raumtemperatur nachgerührt. Es wurde erneut auf-40°C gekühlt, mit 2 ml THF versetzt und über eine G3-Schlenk-Fritte filtriert. Aus dem Filtrat kristallisierten bei -20°C 3,9 g (26 %) der racemischen Form von Verbindung (2) als gelber Feststoff.

$^1$H-NMR (300 MHz, $CDCl_3$): 6,9 bis 7,7 (m, 14 H, arom. H und β-H), 6,2 (d, 1 H, α-IndH), 2,3 (s, 3 H, $CH_3$), 1,3 (2 s, 6 H, $CH_3$Si). Massenspektrum: 538 $M^+$, korrektes Zerfallsmuster.

Nach Aufkonzentration des Filtrates und Kristallisation bei -30°C wurden weitere 2,3 g (15 %) der pseudo-rac-Form von Verbindung (2) als gelber Feststoff erhalten.

$^1$H-NMR (300 MHz, $CDCl_3$): 6,9 bis 7,7 (m, 14 H, arom. H und β-H-IndH), 2,35 (s, 3 H, $CH_3$); 1,5 und 1,1 (2 s, 6 H, $CH_3$Si).

Beispiel C

Dimethylsilandiyl(2-methyl-4,5-benzo-1-indenyl)(2-methyl-1-indenyl)zirkondichlorid (3)

Zu einer Lösung von 50,1 g (278 mmol) 2-Methyl-4,5-benzoindenyl (die Herstellung ist in EP 549 900 beschrieben) in 500 ml Toluol und 25 ml $Et_2O$ wurden bei Raumtemperatur innerhalb von 30 Minuten 111 ml einer 2,5 M Lösung von Butyllithium in Hexan zugetropft und anschließend 2 Stunden bei 40°C nachgerührt. Die Suspension wurde anschließend bei Raumtemperatur zu einer Lösung von 135 ml (1112 mmol) Dimethyldichlorsilan in 200 ml Toluol getropft und 3 Stunden bei Raumtemperatur nachgerührt. Das Lösemittel wurde im Vakuum entfernt, der Rückstand im Vakuum (0,1 Torr) getrocknet und anschließend in 200 ml Toluol aufgenommen. Die Suspension wird vom Lithiumchlorid abfiltriert und das Lösungsmittel des Filtrats im Vakuum entfernt. Man erhält 43 g (57 %) eines roten öligen Produktes.

14,9 g (51,9 mmol) Dimethyl(2-methyl-4,5-benzoindenyl)chlorsilan wurden in 60 ml THF vorgelegt und bei Raumtemperatur eine Suspension von 2-Methylindenyllithium (hergestellt durch Umsetzung von 7,1 g (54,5 mmol) 2-Methylinden in 20 ml THF mit 21,8 ml einer 2,5 M Lösung von Butyllithium in Hexan und 1 Stunde Nachrühren bei 40°C) innerhalb von 15 Minuten zugetropft und anschließend noch 2 Stunden bei Raumtemperatur nachgerührt. Die Reaktionsmischung wurde mit 100 ml Wasser versetzt, die Phasen getrennt und die organische Phase mit 50 ml Wasser gewaschen. Die Lösemittel wurden im Vakuum entfernt und der Rückstand durch Chromatographie an 400 g Kieselgel (Hexan/Methylenchlorid 9:1) gereinigt. Es wurden 8,18 g (43 %) des Ligandsystems von Verbindung 3 als farbloses Öl erhalten.

Zu einer Lösung von 4,18 g (11,4 mmol) des Ligandsystems von Verbindung 3 in 50 ml Toluol/5 ml THF wurden bei Raumtemperatur innerhalb von 20 Minuten 9,6 ml (24 mmol) einer 20 %igen Lösung von Butyllithium in Toluol zugetropft und anschließend noch 2 Stunden bei 50°C nachgerührt. Nach beendeter Gasentwicklung wurde auf -40°C gekühlt, mit 2,33 g (10 mmol) $ZrCl_4$ versetzt und 1 Stunde bei Raumtemperatur nachgerührt. Die Suspension wurde über eine G3-Fritte filtriert, zweimal mit 20 ml Toluol nachgewaschen und der Frittenrückstand im Vakuum getrocknet. Man erhält 3,36 g (56 %) eines Produktgemisches aus rac- und "pseudo-rac"-Verbindung im Verhältnis 3:2. Das Produktgemisch wurde mit 100 ml $CH_2Cl_2$ extrahiert, das Filtrat auf 1/5 seines Volumens eingeengt und bei -30°C zur Kristallisation gelagert. Man erhielt 1,1 g des "pseudo-rac" Komplexes als gelben Feststoff.

$^1$H-NMR (100 MHz, $CDCl_3$): δ = 7,75 bis 7,00 (m, 11 H, arom. H und Benzoindenyl-H), 6,70 (m, 1 H, Ind-H), 2,52/2,48 (je s, je 3 H, $CH_3$-Ind. und $CH_3$-Benzo.); 1,40/1,25 (je s, je 3 H, $(CH_3)_2$)Si.

Durch weitere Extraktion des Frittenrückstandes mit 200 ml $CH_2Cl_2$, einengen des Filtrates auf 20 ml, Kühlung auf -30°C und Abfritten des gebildeten Feststoffes erhielt man 1,4 g der rac-Verbindung.

$^1$H-NMR (100 MHz, $CDCl_3$): δ = 8,03 bis 7,10 (m, 11 H, arom. H und Benzoindenyl-H), 6,78 (m, 1 H, Ind-H),

2,29/2,26 (je s, je 3 H, $CH_3$-Ind. und $CH_3$-Benzo.); 1,30 (s, 6 H, $(CH_3)_2Si$).

Beispiel D:

rac-Diethylgermaniumdiyl(2-methyl-4-phenyl-indenyl)(2-ethylindenyl)zirkoniumdichlorid (4)

Entsprechend Beispiel A wurden aus 20 g (97 mmol) 2-Methyl-4-phenyl-inden, 97 mmol Butyllithium, 60,5 g (300 mmol) Diethyldichlorgermanium, 13,9 g (97 mmol) 2-Ethyl-inden, 97 mmol Butyllithium nach Chromatographie über Kieselgel 30,2 g (65%) des Ligandsystems Diethylgermaniumdiyl(2-methyl-4-phenyl-indenyl)(2-ethyl-indenyl) erhalten.

Aus 10 g (20,8 mmol) des Ligandsystems erhält man nach Deprotonierung mit 42 mmol Butyllithium und Umsetzung mit 4,7 g (20 mmol) Zirkoniumtetrachlorid nach Filtration und Kristallisation 3,6 g (28%) rac-Diethylgermaniumdiyl(2-methyl-4-phenyl-indenyl)(2-ethyl-indenyl)zirkoniumdichlorid.

Beispiel E:

rac-Dimethylsilandiyl(2,4,6-trimethyl-indenyl)(2-methyl-4-phenylindenyl)zirkoniumdichlorid (5)

Entsprechend Beispiel A wurden aus 10 g (63 mmol) 2,4,6-Trimethyl-inden, 63 mmol Butyllithium, 32,3 g (250 mmol) Dimethyldichlorsilan, 13,0 g (63 mmol) 2-Methyl-4-phenyl-inden, 63 mmol Butyllithium nach Chromatographie über Kieselgel 18,8 g (71%) des Ligandsystems Dimethylsitandiyl(2,4,6-trimethyl-indenyl)(2-methyl-4-phenyl-indenyl) erhalten.

Aus 10 g (23,7 mmol) des Ligandsystems erhält man nach Deprotonierung mit 47,4 mmol Butyllithium und Umsetzung mit 5,5 g (23,7 mmol) Zirkoniumtetrachlorid nach Filtration und Kristallisation 4,3 g (31 %) rac-Dimethylsilandiyl(2,4,6-trimethyl-indenyl)(2-methyl-4-phenylindenyl)zirkoniumdichlorid.

Beispiel F:

rac-Dimethylsilandiyl(2-methyl-4,6-diisopropylindenyl)(2-methylindenyl)zirkoniumdichlorid (6)

Entsprechend Beispiel A wurden aus 10 g (47 mmol) 2-Methyl-4,6-diisopropylinden, 47 mmol Butyllithium, 24,3 g (188 mmol) Dimethyldichlorsilan, 6,1 g (47 mmol) 2-Methyl-inden, 47 mmol Butyllithium nach Chromatographie über Kieselgel 12,2 g (65%) des Ligandsystems Dimethylsilandiyl(2-methyl-4,6-diisopropyl-indenyl)(2-methyl-indenyl) erhalten.

Aus 10 g (25 mmol) des Ligandsystems erhält man nach Deprotonierung mit 50 mmol Butyllithium und Umsetzung mit 5,8 g (25 mmol) Zirkoniumtetrachlorid nach Filtration und Kristallisation 3,5 g (25%) rac-Dimethylsilandiyl (2-methyl-4,6-diisopropylindenyl)(2-methyl-indenyl)zirkoniumdichlorid.

Beispiel G:

rac-Dimethylgermaniumdiyl(2-methyl-4-phenyl-indenyl)(2-methylindenyl)zirkoniumdichlorid (7)

Entsprechend Beispiel A wurden aus 5 g (24 mmol) 2-Methyl-4-phenyl-inden, 24 mmol Butyllithium, 16,7 g (96 mmol) Dimethyldichlorgermanium, 3,1 g (24 mmol) 2-Methyl-inden, 24 mmol Butyllithium nach Chromatographie über Kieselgel 6,1 g (58%) des Ligandsystems Dimethylgermaniumdiyl(2-methyl-4-phenyl-indenyl)(2-methyl-indenyl) erhalten.

Aus 5,0 g (11,4 mmol) des Ligandsystems erhält man nach Deprotonierung mit 22,8 mmol Butyllithium und Umsetzung mit 2,7 g (11,4 mmol) Zirkoniumtetrachlorid nach Filtration und Kristallisation 2,2 g (33%) rac-Dimethylgermaniumdiyl(2-methyl-4-phenyl-indenyl)(2-methylindenyl)zirkoniumdichlorid.

Beispiel H:

rac-Dimethylsilandiyl(2-Methyl-acenaphth-indenyl)(2-methyl-4-phenylindenyl)zirkonium-dichlorid (8)

Entsprechend Beispiel A wurden aus 10 g (48 mmol) 2-Methyl-acenaphth-inden, 48 mmol Butyllithium, 24,5 g (190 mmol) Dimethyldichlorsilan, 10 g (48 mmol) 2-Methyl-4-phenyl-inden, 48 mmol Butyllithium nach Chromatographie über Kieselgel 16 g (71%) des Ligandsystems Dimethylsilandiyl(2-methyl-acenaphthindenyl)(2-methyl-4-phenylindenyl) erhalten.

Aus 10 g (21,3 mmol) des Ligandsystems erhält man nach Deprotonierung mit 42,6 mmol Butyllithium und Umsetzung mit 4,9 g (21,3 mmol) Zirkoniumtetrachlorid nach Filtration und Kristallisation 3,9 g (29%) rac-Dimethylsilandiyl(2-Methyl-acenaphth-indenyl)(2-methyl-4-phenylindenyl)zirkoniumdichlorid.

Beispiel I:

rac-Diethylgermaniumdiyl(2-methyl-4-[1-naphthyl]-indenyl)(indenyl)zirkoniumdichlorid (9)

Entsprechend Beispiel A wurden aus 5 g (19,5 mmol) 2-Methyl-4-[1-naphthyl]-inden, 20 mmol Butyllithium, 15,7 g (78 mmol) Diethyldichlorgermanium, 2,5 g (19,5 mmol) Inden, 20 mmol Butyllithium nach Chromatographie über Kieselgel 6,2 g (62%) des Ligandsystems Diethylgermaniumdiyl(2-methyl-4-[1-naphthyl]-indenyl)(indenyl) erhalten.

Aus 5,0 g (9,7 mmol) des Ligandsystems erhält man nach Deprotonierung mit 19,5 mmol Butyllithium und Umsetzung mit 2,3 g (9,7 mmol) Zirkoniumtetrachlorid nach Filtration und Kristallisation 1,6 g (24%) rac-Diethylgermaniumdiyl(2-methyl-4-[1-naphthyl]-indenyl) (indenyl)zirkoniumdichlorid.

Polymerisationen

Beispiel 1:

Ein trockener 24 $dm^3$-Reaktor wurde mit Propylen gespült und mit 12 $dm^3$ flüssigem Propylen und 25 $cm^3$ toluolischer Methylaluminoxanlösung (entsprechend 37 mmol Al, mittlerer Oligomerisierungsgrad war n = 20) befüllt. Der Inhalt wurde bei 30°C 5 Minuten mit 250 Upm gerührt. Parallel dazu wurden 0,9 mg rac-Dimethylsitandiyl(2-methyl-4-phenyl-l-indenyl)(2-methyl-1-indenyl)zirkondichlorid in 10 $cm^3$ toluolischer Methylaluminoxanlösung (17 mmol Al) gelöst und durch 5 minütiges stehenlassen voraktiviert. Die Lösung wurde in den Reaktor gegeben und es wurde 1 Stunde bei 70°C polymerisiert. Es wurden 0,73 kg Polypropylen erhalten. Die Metallocenaktivität war 811 kg PP/g Metallocen x h. Am Polymeren wurden folgende Eigenschaften ermittelt: VZ = 379 $cm^3$/g; $M_w$ = 537500 g/mol, $M_w/M_n$ 2,2; MFI (230/2) = 0,3 dg/min, MFI (230/5) = 1,5 dg/min; Schmp. 155°C, II = 98,3 %, $n_{iso}$ = 86.

Vergleichsbeispiel 1:

Es wurde verfahren wie in Beispiel 1, verwendet wurde jedoch das Metallocen rac-Dimethylsilandiylbis(2-methyl-1-indenyl)zirkondichlorid. Die Metallocenaktivität war 350 kgPP/g Metallocen x h.
VZ = 180 cm3 /g; $M_w$ = 187000 g/mol, $M_w$ /$_{Mn}$ = 2,5; MFI (230/2) = 13 dg/min, MFI (230/5) = 37 dg/min; Schmp. 145°C.

Beispiel 2:

Es wurde verfahren wie in Beispiel 1, es wurden jedoch 2,5 mg des Metallocens verwendet und die Polymerisationstemperatur war 50°C. Die Metallocenaktivität war 398 kgPP/g Metallocen x h und am Polymer wurden folgende Daten ermittelt:
VZ = 553 $cm^3$/g; $M_w$ = 811000 g/mol, $M_w/M_n$ = 2,3; MFI (230/2) = 0,1 dg/min, MFI (230/5) = 0,5 dg/min; Schmp. 158°C.

Vergleichsbeispiel 2:

Beispiel 2 wurde mit dem Metallocen rac-Dimethylsilandiylbis(2-methyl-1-indenyl)zirkondichlorid wiederholt. Die Metallocenaktivität war 125 kgPP/g Metallocen x h.
VZ = 250 $cm^3$/g; $M_w$ = 318000 g/mol, $M_w$ /$M_n$ = 2,1; MFI (230/5) = 10 dg/min; Schmp. 148°C.

Beispiel 3:

Es wurde verfahren wie in Beispiel 1, verwendet wurden jedoch zusätzlich noch 5 $Ndm^3$ Wasserstoff. Die Metallocenaktivität war 1187 kgPP/g Metallocen x h. VZ = 226 $cm^3$/g; $M_w$ = 282500 g/mol, $M_w$ /$M_n$ = 1,9; MFI (230/2) = 7 dg/min, MFI (230/5) = 20 dg/min; Schmp. 160°C, II = 98,6, $n_{iso}$ = 125. Das Beispiel belegt die gute Molmassenregelbarkeit mit Wasserstoff.

Beispiel 4:

Es wurde verfahren wie in Beispiel 1, verwendet wurde jedoch das Metallocen in einer rac:"pseudo-rac"-Mischung von 1:1. Die Metallocenaktivität war 656 kgPP/g Metallocen x h.

VZ = 351 $cm^3/g$; $M_w$ = 502500 g/mol, $M_w/M_n$ = 2,3; MFI (230/5) = 2,6 dg/min; Schmp. 155°C.

Beispiel 5:

Es wurde verfahren wie in Beispiel 4, verwendet wurde jedoch eine 1:5 rac zu "pseudo-rac"-Fraktion des Metallocens. Die Metallocenaktivität war 510 kgPP/g Metallocen x h.
VZ = 315 $cm^3/g$; $M_w$ = 354500 g/mol, $M_w/M_n$ = 2,3; MFI (230/5) = 3,0 dg/min; Schmp. 153°C.

Beispiel 6:

Beispiel 5 wurde bei 50°C Polymerisationstemperatur wiederholt. Die Metallocenaktivität war 215 kgPP/g Metallocen x h.
VZ = 451 $cm^3/g$; $M_w$ = 587500 g/mol, $M_w/M_n$ = 2,6; MFI (230/5) = 1,6 dg/min; Schmp. 159°C.

Vergleichsbeispiel 3:

Beispiel 5 wurde mit dem Metallocen meso-Dimethylsilandiylbis(2-methyl-1-indenyl)zirkondichlorid wiederholt. Es wurde kein Polymerpulver erhalten. Die erhaltene Masse war weich und klebrig, die amorphe Masse wies keinen Schmelzpunkt auf und die VZ war 42 $cm^3/g$. $^{13}C$-NMR-Messungen belegen, daß es sich um reines ataktisches Polymer handelt ($n_{iso}$ = 2, $n_{syndio}$ = 2, II = 52 %). Ein Schmelzindexwert war aufgrund der Dünnflüssigkeit des Polymers ebenfalls nicht zu ermitteln. Die Metallocenaktivität in der Polymerisation betrug 8,6 kgPP/g Metallocen x h.

Vergleichsbeispiel 4:

Beispiel 5 wurde mit dem Metallocen meso-Dimethylsilandiylbis(2-methyl-4-phenyl-1-indenyl)zirkondichlorid wiederholt. Das erhaltene Polymer entsprach in seinen Eigenschaften dem aus Vergleichsversuch 3, es handelt sich ebenfalls um ataktisches Polypropylen, die VZ war 110 $cm^3/g$, die Metallocenaktivität war 52 kgPP/g Metallocen x h.

Beispiel 7:

Es wurde verfahren wie in Beispiel 1, verwendet wurde jedoch das Metallocen rac-Dimethysilandiyl(2-methyl-4,5-benzo-1-indenyl)(2-methyl-1-indenyl)zirkondichlorid. Die Metallocenaktivität war 496 kgPP/g Metallocen x h. VZ = 164 $cm^3/g$; $M_w$ = 190000 g/mol, $M_w/M_n$ = 2,2; MFI (230/2) = 8 dg/min, MFI (230/5) = 25 dg/min; Schmp. 144°C.

Beispiel 8:

Es wurde verfahren wie in Beispiel 2, verwendet wurde jedoch das Metallocen aus Beispiel 7. Die Metallocenaktivität war 245 kgPP/g Metallocen x h.
VZ = 274 $cm^3/g$; $M_w$ = 349500 g/mol, $M_w/M_n$ = 2,3; MFI (230/2) = 2 dg/min, MFI (230/5) = 6 dg/min; Schmp. 148°C, II = 97,5 %, $n_{iso}$ = 66.

Beispiel 9:

Es wurde verfahren wie in Beispiel 2, verwendet wurde jedoch das Metallocen Dimethylsilandiyl(2-methyl-4,5-benzo-1-indenyl)(2-methyl-1-indenyl)zirkondichlorid in einer rac:"pseudo-rac" 1:10-Mischung. Die Metallocenaktivität war 214 kgPP/g Metallocen x h.
VZ = 269 cm3 /g; $M_w$ = 382000 g/mol, $M_w/M_n$ = 2,2; MFI (230/2) = 3,1 dg/min, MFI (230/5) = 9 dg/min; Schmp. 146°C.

Beispiel 10:

Es wurde verfahren wie in Beispiel 2, verwendet wurde jedoch das Metallocen Dimethysilandiyl(2-methyl-4,5-benzo-1-indenyl)(2-methyl-1-indenyl)zirkondichlorid im rac:pr = 3:2-Verhältnis, wie es ex Synthese nach der Filtration über eine G3-Fritte im Filtrat vorliegt. Die Metallocenaktivität war 249 kgPP/g Metallocen x h.
VZ = 282 $cm^3/g$; $M_w$ = 384500 g/mol, $M_w/M_n$ = 2,2; MFI (230/2) = 2 dg/min, MFI (230/5) = 5,5 dg/min; Schmp. 148°C, II = 97,6 %, $n_{iso}$ = 59.

Beispiel 11:

Es wurde verfahren wie in Beispiel 1, verwendet wurde jedoch das Metallocen rac-Dimethylsilandiyl(2-methyl-4-phenyl-1-indenyl)(1-indenyl)zirkondichlorid. Die Metallocenaktivität war 935 kgPP/g Metallocen x h.
VZ = 136 $cm^3$/g; $M_w$ = 128500 g/mol, $M_w/M_n$ = 2,0; MFI (230/2) = 35 dg/min; Schmp. 151 °C.

Beispiel 12:

Es wurde verfahren wie in Beispiel 2, verwendet wurde jedoch das Metallocen von Beispiel 11. Die Metallocenaktivität war 399 kgPP/g Metallocen x h.
VZ = 190 $cm^3$/g; $M_w$ = 204500 g/mol, $M_w/M_n$ = 2,0; MFI (230/2) = 9 dg/min; Schmp. 154°C.

Beispiel 13:

Es wurde verfahren wie in Beispiel 2, verwendet wurde jedoch das Metallocen - Dimethysilandiyl(2-methyl-4,5-benzo-1-indenyl)(2-methyl-1-indenyl)zirkondichlorid in einer rac:"pseudo-rac" 1:8-Mischung. Die Metallocenaktivität war 228 kgPP/g Metallocen x h. VZ = 182 $cm^3$/g; $M_w$ = 201500 g/mol, $M_w/M_n$ = 2,2; MFI (230/2) = 12,5 dg/min; Schmp. 154°C.

Beispiel 14:

Es wurde verfahren wie in Beispiel 1, verwendet wurde jedoch das Metallocen Dimethylsilandiyl(2-methyl-4-phenyl-1-indenyl)(1-indenyl)zirkondichlorid in der ex Synthese anfallenden Isomerenmischung von rac:pr = 1:0,6. Die Metallocenaktivität war 382 kgPP/g Metallocen x h.
VZ = 184 $cm^3$/g; $M_w$ = 216000 g/mol, $M_w/M_n$ = 3,3; MFI (230/2) = 8 dg/min; Schmp. 155°C, II = 98,0 %, $n_{iso}$ = 82.

Vergleichsbeispiel 5:

Es wurde verfahren wie in Beispiel 11, verwendet wurde jedoch das nicht erfindungsgemäße Metallocen rac-Dimethylsilandiylbis(1-indenyl)zirkondichlorid. Die Metallocenaktivität war 559 kgPP/g Metallocen x h.
VZ = 43 $cm^3$/g; $M_w$ = 34900 g/mol, $M_w$ /$M_n$ = 2,5; MFI nicht mehr meßbar, da zu dünnflüssig; Schmp. 137°C.

Beispiel 15:

Beispiel 1 wurde mit dem Metallocen Dimethylsilandiyl(2-ethyl-4-phenyl-1-indenyl)(2-methyl-1-indenyl)zirkondichlorid wiederholt, das Verhältnis rac:pr war 4:1,5 (ex Synthese). Die Metallocenaktivität war 671 kgPP/g Metallocen x h.
VZ = 357 $cm^3$/g; $M_w$ = 494000 g/mol, $M_w/M_n$ = 2,4; MFI (230/5) = 3 dg/min; Schmp. 159°C.

Beispiel 16:

Beispiel 15 wurde bei 50°C Polymerisationstemperatur wiederholt. Die Metallocenaktivität war 329 kgPP/g Metallocen x h.
VZ = 524 cm3 /g; $M_w$ = 698000 g/mol, $M_w$ /$M_n$ = 2,0; MFI (230/5) = 1 dg/min; Schmp. 163°C.

Beispiel 17:

Beispiel 1 wurde mit dem Metallocen Dimethylsilandiyl(2-methyl-4-(1-naphthyl)-1-indenyl)(2-methyl-1-indenyl)zirkondichlorid wiederholt, das rac:pr Verhältnis war 3:1,4 (ex Synthese).
Die Metallocenaktivität war 749 kgPP/g Metallocen x h.
VZ = 449 $cm^3$/g; $M_w$ = 647500 g/mol, $M_w/M_n$ = 2,2; Schmp. 156°C.

Beispiel 18:

Beispiel 1 wurde mit dem Metallocen 1,2-Ethandiyl(2-ethyl-4-(1-naphthyl)-1-indenyl)(2-methyl-1-indenyl)zirkondichlorid wiederholt, das rac:pr Verhältnis war 2,5:1 (ex Synthese).
Die Metallocenaktivität war 519 kgPP/g Metallocen x h.
VZ = 401 $cm^3$ /g; $M_w$ = 584500 g/mol, $M_w$ /$M_n$ = 2,0; Schmp. 152°C.

Beispiel 19

Beispiel 1 wurde wiederholt, vor Zugabe des Propylens wurden jedoch 2,5 $Ndm^3$ Wasserstoff in den Reaktor gegeben und während der Polymerisation wurden zusätzlich 60 g Ethylen als Comonomer zudosiert.
Die Metallocenaktivität war 1386 kg Copolymer/g Metallocen x h. Am Polymer wurden folgende Eigenschaften ermittelt:
4,1 Gew.-% Ethylengehalt,
VZ = 179 $cm^3$/g, $M_w$ = 217500 g/mol, $M_w / M_n$ = 2,0, Schmp. = 136°C, 0,75 % des Polymeren sind mit siedenden Hexan extrahierbar.

Beispiel 20

Beispiel 19 wurde mit 60 g 1-Hexen als Comonomer wiederholt.
Die Metallocenaktivität war 998 kg Copolymer/g Metallocen x h. Am Polymer wurden folgende Eigenschaften ermittelt:
5,6 Gew.-% Hexengehalt,
VZ = 208 $cm^3$/g, $M_w$ = 237000 g/mol, $M_w / M_n$ = 1,9, Schmp. = 127°C.

Beispiel 21

Beispiel 19 wurde mit 1-Buten als Comonomer wiederholt. Der Butengehalt im Polymeren war 5,1 Gew.-%, der Schmelzpunkt lag bei 130°C.

Beispiel 22

Ein trockener 150 $dm^3$ Reaktor wurde mit Stickstoff gespült und bei 20°C mit 100 $dm^3$ eines entaromatisierten Benzinschnittes mit dem Siedebereich 100 bis 120°C gefüllt. Dann wurde der Gasraum durch 5-maliges Aufdrücken von 2 bar Propylen und Entspannen stickstofffrei gespült. Nach Zugabe von 50 l flüssigem Propylen wurden 64 $cm^3$ toluolische Methylaluminoxanlösung (entsprechend 100 mmol Al) zugegeben und der Reaktorinhalt auf 50°C aufgeheizt. Durch Zudosierung von Wasserstoff wurde ein Wasserstoffgehalt im Reaktorgasraum von 1,5 % eingestellt und später dann durch Nachdosierung während der gesamten Propylenpolymerisationszeit konstant gehalten (Gaschromatrographie, on-line-Messung). 15 mg des Metallocens rac-Diethylgermyl-(2-methyl-4-phenyl-1-indenyl)(2-ethyl-1-indenyl)-zirkondichlorid wurden in 16 $cm^3$ toluolischer Methylaluminoxanlösung (entsprechend 25 mmol Al) gelöst und nach 15 Minuten in den Reaktor gegeben. Durch Kühlung wurde der Reaktor 5 Stunden bei 55°C Polymerisationstemperatur gehalten. Nach Abgasen von Wasserstoff und Propylen bis auf einen Propylendruck von 1,5 bar im Reaktor wurden nach Zugabe von 2,5 kg Ethylen weitere 3 Stunden bei 50°C polymerisiert.
Der Reaktorinhalt wurde auf eine Drucknutsche abgelassen, mittels Wasserdampfdestillation wurde das Produkt von Restsuspensionsmittel abgetrennt und 24 Stunden bei 80°C/200 mbar getrocknet. Es wurden 21,5 kg Blockcopolymerpulver, entsprechend einer Metallocenaktivität von 179,2 kg Copolymer/g Metallocen x h erhalten. Das Blockcopolymer enthielt 10,8 Gew.-% Ethylen, die Fraktionierung ergab enen Gehalt von 22,7 Gew.-% Ethylen/Propylen-Kautschuk, die Glastemperatur des Kautschuks war -54,5°C. Der MFI (230/2) des Gesamtpolymers war 16 dg/min.

Beispiel 23

Beispiel 19 wurde wiederholt, in den Reaktor wurden jedoch neben 500 g Ethylen noch 150 ml 5-Ethyliden-2-norbornen während der Polymerisationszeit eindosiert. Die Polymerisationstemperatur war 50°C. Es wurde ein Terpolymerkautschuk mit einer Glastemperatur von -59,8°C erhalten. Der Ethylengehalt im Polymeren war 42 Gew.-% und der Ethylidennorbornengehalt war 4,8 Gew.-%.

Beispiel 24

Verwendung eines geträgerten Metallocens als Katalysator:

a) Herstellung des geträgerten Cokatalysators

Herstellung des geträgerten Cokatalysators erfolgte wie in EP 92 107 331.8 beschrieben in der folgenden Weise in einem Edelstahl-Reaktor in explosionsgeschützter Ausführung mit einem Umpumpsystem der Druckstufe 60 bar, mit Inertgasversorgung, Temperierung durch Mantelkühlung und zweitem Kühlkreislauf über einen Wärmetauscher am Umpumpsystem. Das Umpumpsystem saugte den Reaktorinhalt über einen Anschluß im Reaktorboden mit einer Pumpe an und drückte ihn in einen Mischer und durch eine Steigleitung über einen Wärmetauscher in den Reaktor

zurück. Der Mischer war so geschaltet, daß sich in dem Zulauf ein verengter Rohrquerschnitt befand, wo eine erhöhte Strömungsgeschwindigkeit entstand, und in dessen Turbulenzzone axial und entgegen der Strömungsrichtung eine dünne Zuleitung geführt war, durch welche - getaktet - jeweils eine definierte Menge Wasser unter 40 bar Argondruck eingespeist werden konnte. Die Kontrolle der Reaktion erfolgte über einen Probennehmer am Umpumpkreislauf.

Im vorstehend beschriebenen Reaktor mit 16 $dm^3$ Volumen wurden 5 $dm^3$ Decan unter Inertbedingungen vorgelegt. 0,3 $dm^3$ ( = 3,1 mol) Trimethylaluminium wurden bei 25°C zugefügt. Danach wurden 250 g Kieselgel SD 3116-30 (Grace AG), welche vorher bei 120°C in einem Argonfließbett getrocknet wurden, durch einen Feststofftrichter in den Reaktor eindosiert und mit Hilfe des Rührers und des Umpumpsystems homogen verteilt. Eine Gesamtmenge von 45,9 g Wasser wurde in Portionen von 0,1 $cm^3$ während 2 Stunden jeweils alle 15 Sekunen in den Reaktor gegeben. Der Druck, herrührend von Argon und den entwickelten Gasen, wurde durch Druckregelventile konstant bei 10 bar gehalten. Nachdem alles Wasser eingebracht worden war, wurde das Umpumpsystem abgeschaltet und das Rühren noch 5 Stunden bei 25°C forgesetzt. Über eine Drucknutsche wurde das Lösungsmittel entfernt und der Cokatalysatorfeststoff mit Decan gewaschen. Dann wurde im Vakuum getrocknet. Der isolierte Feststoff enthielt 18,4 Gew.-% Aluminium. 15 g dieses Festoffes (102 mmol Al) wurden in einem rührbaren Gefäß in 100 $cm^3$ Toluol suspendiert und auf -30°C abgekühlt. Gleichzeitig wurden 200 mg rac/pr 7:1 $Me_2Si$(2,4,6-trimethyl-1-indenyl)(2-methyl-4-phenyl-1-indenyl)$ZrCl_2$ in 75 $cm^3$ Toluol gelöst und innerhalb von 30 Minuten zur Suspension zugetropft. Es wurde langsam unter Rühren auf Raumtemperatur erwärmt, wobei die Suspension eine rote Farbe annahm. Anschließend wurde eine Stunde bei 50°C gerührt und nach dem Abkühlen auf Raumtemperatur wurde das Gemisch filtriert und der Feststoff 3 mal mit je 100 $cm^3$ Toluol und 1 mal mit 100 $cm^3$ Hexan gewaschen. Der verbleibende, hexanfeuchte Filterrückstand wurde im Vakuum getrocknet. Man erhielt 14,2 g frei fließenden, hellroten, geträgerten Katalysator. Die Analyse ergab einen Gehalt von 10,9 mg Zirkonocen pro Gramm Katalysator.

b) Polymerisation

1,2 g des unter a) hergestellten Katalysators wurden in 25 $cm^3$ eines entaromatisierten Benzinschnittes mit dem Siedebereich 100 bis 120°C suspendiert.

Parallel dazu wurde ein trockener 24 $dm^3$-Reaktor zunächst mit Stickstoff und anschließend mit Propylen gespült und mit 12 $dm^3$ flüssigem Propylen und mit 1,5 $dm^3$ Wasserstoff befüllt. Dannn wurde 3 $cm^3$ Triisobutylaluminium (12 mmol) mit 30 ml Hexan verdünnt, in den Reaktor gegeben und der Ansatz bei 30°C 15 Minuten gerührt. Anschließend wurde die Katalysator-Suspension in den Reaktor gegeben, auf die Polymerisationstemperatur von 80°C aufgeheizt (10°C/min) und das Polymerisationssystem 1 Stunde durch Kühlung bei 80°C gehalten. Gestoppt wurde die Polymerisation durch Zusatz von 20 ml Isopropanol. Das überschüssige Monomer wurde abgegast, das Polymer im Vakuum getrocknet. Es resultierten 2,78 kg Polypropylen-Pulver. Die Metallocenaktivität betrug somit 212,5 kg PP/g Met. x h. Am Polymeren wurden folgende Eigenschaften ermittelt:
VZ = 298 $cm^3$/g; $M_w$ = 378500 g/mol, $M_w$ /$M_n$ = 2,0;
MFI (230/5) = 3,9 dg/min; MFI (230/2) = 1,2 dg/min; Schmp. 150°C.
Pulvermorphologie: keine Fines < 200 µm, mittlerer Korndurchmesser
$d_{50}$ = 735 µm, kein Überhorn > 1500 µm, enge Kornverteilung s = ln ($d_{50}$/$d_{16}$) = 0,25; Schüttdichte 495 g/$dm^3$.

Beispiele 25 bis 28

Beispiel 1 wurde wiederholt, als Metallocen wurden jedoch die in der Tabelle 1 aufgeführten Verbindungen verwendet. Aktivitäten und Polymerdaten sind ebenfalls der Tabelle 1 zu entnehmen.

Tabelle 1 Ethylenpolymerisationen (Beispiele D bis H)

| Beispiel | Metallocen | Aktivität [kg PP/g Metallocen. x h] | VZ [$cm^3$/g] | Schmp. (°C) | $M_w/M_n$ | MFI(230/2) (dg/min) |
|---|---|---|---|---|---|---|
| 25 | rac-$Me_2$Si(2-methyl-4,6-diisopropyl-1-indenyl)-(2-methyl-1-indenyl)$ZrCl_2$ | 458 | 149 | 145 | 2,1 | 25 |
| 26 | rac-$Me_2$Ge(2-methyl-4-phenyl-1-indenyl)-(2-methyl-1-indenyl)$ZrCl_2$ | 924 | 407 | 155 | 2,4 | 0,5 |
| 27 | rac-$Me_2$Si(2-methyl-$\alpha$-acenaphth-1-indenyl)-(2-methyl-4-phenyl-1-indenyl)$ZrCl_2$ | 1100 | 587 | 157 | 2,3 | 0,1 |
| 28 | rac-$Et_2$Ge(2-methyl-4-[1-naphthyl]-1-indenyl)-(indenyl)$ZrCl_2$ | 865 | 186 | 152 | 2,0 | 8,5 |

Beispiele 29 bis 34

Ein trockener 1,5 $dm^3$-Reaktor wurde mit Stickstoff gespült und bei 20°C mit 0,75 $dm^3$ eines entaromatisierten Benzinschnitts mit dem Siedebereich 100 bis 120°C gefüllt. Dann wurde das Gasraum des Reaktors durch 5-maliges Aufdrücken von 2 bar Ethylen und Entspannen stickstofffrei gespült. Danach wurden 3,75 $cm^3$ toluolische Methylaluminoxanlösung (5 mmol Al, n = 18) zugegeben. Unter Rühren wurde der Reaktor auf 30°C (innerhalb 15 Minuten) aufgeheizt und bei 500 Upm Rührgeschwindigkeit wurde durch Zugabe von Ethylen ein Gesamtdurck von 5 bar eingestellt. Parallel dazu wurden 0,125 mg Metallocen (Typ der Verbindung siehe Tabelle 2) in 1,25 $cm^3$ toluolischer Methylaluminoxanlösung (1,67 mmol Al, n = 18) aufgelöst und durch 15 minütiges Stehenlassen zur vollständigen Reaktion gebracht. Dann wurde die Lösung in den Reaktor gegeben, das Polymerisationssystem wurde auf 70°C gebracht und durch entsprechende Kühlung 1 Stunde bei dieser Temperatur belassen. Durch entsprechende Zufuhr von Ethylen wurde der Druck während dieser Zeit bei 5 bar gehalten. Durch Zugabe von 2 ml Isopropanol wurde dann die Polymerisation gestoppt, das Polymer abfiltriert und im Vakuum getrocknet. Die Ergebnisse der Polymerisationen sind der Tabelle 2 zu entnehmen.

Beispiel 35 und 36

Beispiel 24 wurde bei den Polymerisationstemperaturen 65°C (Beispiel 35) und 88°C (Beispiel 36) wiederholt. Bei 88°C Polymerisationstemperatur wurde aufgrund der hohen Polymerisationsaktivität die Polymerisation nach 30 Minuten beendigt. Es wurden am Polymer Schmelzpunkte von 148°C (Beispiel 35) und 156°C (Beispiel 36) gemessen.

Tabelle 2 Beispiele 29 bis 34

| Beispiel | Metallocen | Aktivität [Kg PE/g Met. x h] | VZ [$cm^3/g$] |
|---|---|---|---|
| 29 | $Me_2Si$(2-methyl-4-phenyl-1-indenyl)(2-methyl-1-indenyl)$ZrCl_2$ [rac:pr = 5:1] | 248 | 473 |
| 30 | pr-$Me_2Si$(2-methyl-4-phenyl-1-indenyl)(2-methyl-1-indenyl)$ZrCl_2$ | 224 | 482 |
| 31 | $Me_2Si$(2-methyl-4,5-benzo-1-indenyl)(2-methyl-1-indenyl)$ZrCl_2$ [rac:pr = 15:1] | 272 | 473 |
| 32 | pr-$Me_2Si$(2-methyl-4,5-benzo-1-indenyl)(2-methyl-1-indenyl)$ZrCl_2$ | 296 | 444 |
| 33 | $Me_2Si$(2-metyhl-4-phenyl-1-indenyl)(1-indenyl)$ZrCl_2$ [rac:pr = 10:1] | 480 | 551 |
| 34 | pr-$Me_2Si$(2-methyl-4-phenyl-1-indenyl)(1-indenyl)$ZrCl_2$ | 465 | 461 |

## Patentansprüche

**1.** Bisindenylliganden der Formel IV

$$HR^{c} - ( CR^{8}R^{9})_{m}\text{-}R7 - ( CR^{8}R^{9})_{n}\text{-} R^{d}H \qquad \text{(IV)}$$

mit

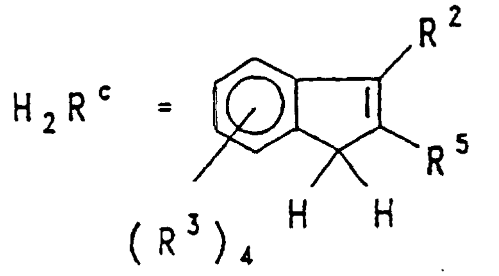

,

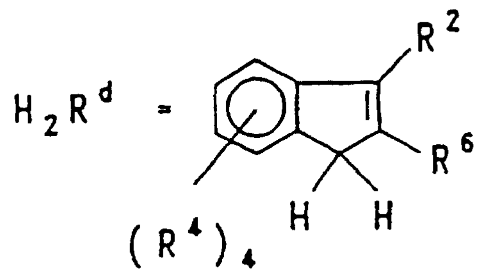

, worin

die Reste $R^2$ gleich oder verschieden sind und Wasserstoff, ein Halogenatom, eine $C_1$-$C_{10}$-Alkylgruppe, die halogeniert sein kann, eine $C_6$-$C_{10}$-Arylgruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe, einen -$NR_2{}^{10}$, -$OR^{10}$, -$SR^{10}$, -$OSiR_3{}^{10}$, -$SiR_3{}^{10}$ oder -$PR_2{}^{10}$-Rest bedeuten, worin $R^{10}$ ein Halogenatom, eine $C_1$-$C_{10}$-Alkylgruppe oder eine $C_6$-$C_{10}$-Arylgruppe bedeuten,

die Reste $R^3$ gleich oder verschieden sind und ein Wasserstoffatom, ein Halogenatom, eine $C_1$-$C_{20}$-Alkylgruppe, eine $C_1$-$C_{20}$-Fluoralkylgruppe, eine $C_6$-$C_{30}$-Arylgruppe, eine $C_6$-$C_{30}$-Fluorarylgruppe, eine $C_1$-$C_{20}$-Alkoxygruppe, eine $C_2$-$C_{20}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe, einen -$NR_2{}^{10}$, -$OR^{10}$, -$SR^{10}$, -$OSiR_3{}^{10}$, -$SiR_3{}^{10}$ oder -$PR_2{}^{10}$-Rest bedeuten, worin $R^{10}$ ein Halogenatom, eine $C_1$-$C_{10}$-Alkylgruppe oder eine $C_6$-$C_{10}$-Arylgruppe ist, oder zwei oder mehr Reste $R^3$ zusammen mit den sie verbindenden Atomen ein Ringsystem bilden,

die Reste $R^4$ gleich oder verschieden sind und ein Wasserstoffatom, ein Halogenatom, eine $C_1$-$C_{20}$-Alkylgruppe, eine $C_1$-$C_{20}$-Fluoralkylgruppe, eine $C_6$-$C_{30}$-Arylgruppe, eine $C_6$-$C_{30}$-Fluorarylgruppe, eine $C_1$-$C_{20}$-Alkoxygruppe, eine $C_2$-$C_{20}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe, einen -$NR_2{}^{10}$, -$OR^{10}$, -$SR^{10}$, -$OSiR_3{}^{10}$, -$SiR_3{}^{10}$ oder -$PR_2{}^{10}$-Rest bedeuten, worin $R^{10}$ ein Halogenatom, eine $C_1$-$C_{10}$-Alkylgruppe oder eine $C_6$-$C_{10}$-Arylgruppe ist, oder zwei oder mehr Reste $R^4$ zusammen mit den sie verbindenden Atomen ein Ringsystem bilden,

$R^5$ ein Halogenatom, eine $C_1$-$C_{10}$-Alkylgruppe, die halogeniert sein kann, eine $C_6$-$C_{10}$-Arylgruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe, einen -$NR_2{}^{10}$, -$OR^{10}$, -$SR^{10}$, -$OSiR_3{}^{10}$, -$SiR_3{}^{10}$ oder -$PR_2{}^{10}$-Rest, worin $R^{10}$ ein Halogenatom, eine $C_1$-$C_{10}$-Alkylgruppe oder eine $C_6$-$C_{10}$-Arylgruppe ist, bedeutet,

$R^6$ ein Wasserstoffatom, ein Halogenatom, eine $C_1$-$C_{10}$-Alkylgruppe, die halogeniert sein kann, eine $C_6$-$C_{10}$-Arylgruppe, eine $C_2$-$C_{10}$-Alkenylgruppe, eine $C_7C_{40}$-Arylalkylgruppe, eine $C_7$-$C_{40}$-Alkyloxygruppe, eine $C_8$-$C_{40}$-Arylalkenylgruppe, einen -$NR_2{}^{10}$, -$OR^{10}$, -$SR^{10}$, -$OSiR_3{}^{10}$, -$SiR_3{}^{10}$ oder -$PR_2{}^{10}$-Rest, worin $R^{10}$ ein Halogenatom, eine $C_1$-$C_{10}$-Alkylgruppe oder eine $C_6$-$C_{10}$-Arylgruppe ist, bedeutet,

$R^7$

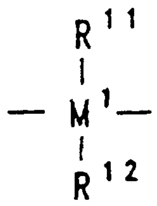, 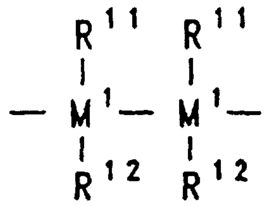, 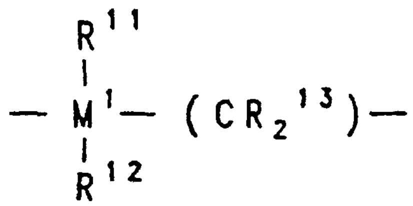,

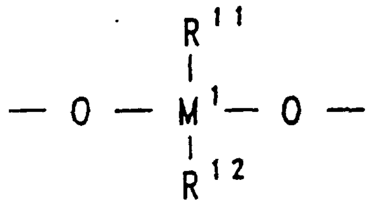, 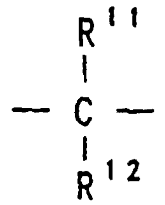, 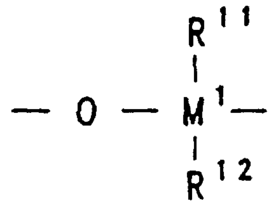,

=$BR^{11}$, =$AlR^{11}$, -Ge-, -Sn-, -O-, -S-, =SO, =$SO_2$, =$NR^{11}$, =CO, =$PR^{11}$ oder =$P(O)R^{11}$ ist, wobei

$R^{11}$, $R^{12}$ und $R^{13}$ gleich oder verschieden sind und ein Wasserstoffatom, ein Halogenatom, eine $C_1$-$C_{20}$-Alkylgruppe, $C_1$-$C_{20}$-Fluoralkylgruppe, eine $C_6$-$C_{30}$-Arylgruppe, eine $C_6$-$C_{30}$-Fluorarylgruppe, eine $C_1$-$C_{20}$-Alkoxygruppe, eine $C_2$-$C_{20}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten, oder $R^{11}$ und $R^{12}$ oder $R^{11}$ und $R^{13}$ zusammen mit den sie verbindenden Atomen einen Ring bilden,
$M^1$ Silizium, Germanium oder Zinn ist,

$R^8$ und $R^9$ gleich oder verschieden sind und ein Wasserstoffatom, ein Halogenatom, eine $C_1$-$C_{20}$-Alkylgruppe, eine $C_1$-$C_{20}$-Fluoralkylgruppe, eine $C_6$-$C_{30}$-Arylgruppe, eine $C_6$-$C_{30}$-Fluorarylgruppe, eine $C_1$-$C_{20}$-Alkoxygruppe, eine $C_2$-$C_{20}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten, oder $R^8$ und $R^9$ zusammen mit den sie verbindenden Atomen einen Ring bilden,

m und n gleich oder verschieden sind und null, 1 oder 2 sind, wobei m plus n null, 1 oder 2 ist, **dadurch gekennzeichnet, daß** die beiden Indenylliganden voneinander verschiedene Substitutionsmuster aufweisen.

**2.** Bisindenylliganden gemäß Anspruch 1, worin $R^2$ Wasserstoff ist, die Reste $R^3$ gleich oder verschieden sind und ein Wasserstoffatom, eine $C_1$-$C_{20}$-Alkylgruppe oder eine $C_6$-$C_{30}$-Arylgruppe bedeuten, oder zwei oder mehr Reste $R^3$ zusammen mit den sie verbindenden Atomen ein Ringsystem bilden, die Reste $R^4$ gleich oder verschieden sind und ein Wasserstoffatom, eine $C_1$-$C_{20}$-Alkylgruppe oder eine $C_6$-$C_{30}$-Arylgruppe bedeuten, oder zwei oder mehr Reste $R^4$ zusammen mit den sie verbindenden Atomen ein Ringsystem bilden, $R^5$ eine $C_1$-$C_{10}$-Alkylgruppe ist, $R^6$ ein Wasserstoffatom oder eine $C_1$-$C_{10}$-Alkylgruppe ist, $R^7$ einen Rest

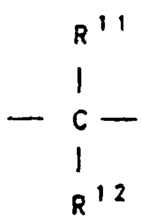, 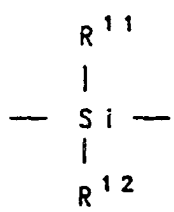 oder 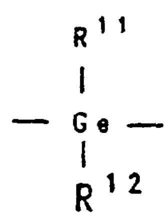,

bedeutet, worin $R^{11}$ und $R^{12}$ gleich oder verschieden sind und eine $C_1$-$C_{20}$-Alkylgruppe oder eine $C_6$-$C_{30}$-Arylgruppe sind, $R^8$ und $R^9$ gleich oder verschieden sind und ein Wasserstoffatom, eine $C_1$-$C_{20}$-Alkylgruppe oder eine $C_6$-$C_{30}$-Arylgruppe sind, und m plus n null oder 1 ist.

**3.** Bisindenylliganden gemäß Anspruch 1, worin

$-(CR^8R^9)_m-R^7-(CR^8R^9)_n-$ gleich Dialkylsilandiyl, Alkyl(aryl)silandiyl, 1,2-Ethandiyl, 1,2-Butandiyl, Diarylsilandiyl, Dialkylmethylen, Diarylmethylen, Alkyl(aryl)methylen, Alkyl(vinyl)silandiyl, Aryl(vinyl)silandiyl oder Dialkylgermyl ist,

$R^3{}_4R^2R^5$-1-indenyl gleich 2-Alky-4-aryl-1-indenyl, 2,4-Dialkyl-1-indenyl, 2,4,6-Trialkyl-1-indenyl, 2-Alkyl-4,5-benzo-1-indenyl, 2,5-Dialkyl-1-indenyl, 2,5,6-Trialkyl-1-indenyl, 2,4,5-Trialkyl-1-indenyl, 2-Alkyl-1-indenyl, 2-Aryl-1-indenyl, 2,6-Alkyl-4-aryl-1-indenyl, 2-Alkyl-5-aryl-1-indenyl, 2-Alkyl-5,6-diaryl-1-indenyl, 2-Alkyl-4,5-diaryl-1-indenyl oder 2-Alkyl-4,6-diaryl-1-indenyl ist, und

$R^4{}_4R^2R^6$-1-indenyl ist gleich 2-Alkyl-4-aryl-1-indenyl, 2,4-Dialkyl-1-indenyl, 2,4,6-Trialkyl-1-indenyl, 2-Alkyl-4,5-benzo-1-indenyl, 2,5-Dialkyl-1-indenyl, 2,5,6-Trialkyl-1-indenyl, 2,4,5-Trialkyl-1-indenyl, 2-Alkyl-1-indenyl, 2-Aryl-1-indenyl, 2,6-Alkyl-4-aryl-1-indenyl, 2-Alkyl-5-aryl-1-indenyl, 2-Alkyl-5,6-diaryl-1-indenyl, 2-Alkyl-4,5-diaryl-1-indenyl, 2-Alkyl-4,6-diaryl-1-indenyl oder 1-indenyl.

**4.** Verwendung eines Bisindenylliganden der Formel IV gemäß Anspruch 1, 2 oder 3 zur Herstellung von Metallocenverbindungen.

## Claims

**1.** A bisindenyl ligand of the formula IV

$$HR^c\text{-}(CR^8R^9)_m\text{-R7-}(CR^8R^9)_n\text{-}R^dH \qquad \text{(IV)}$$

in which

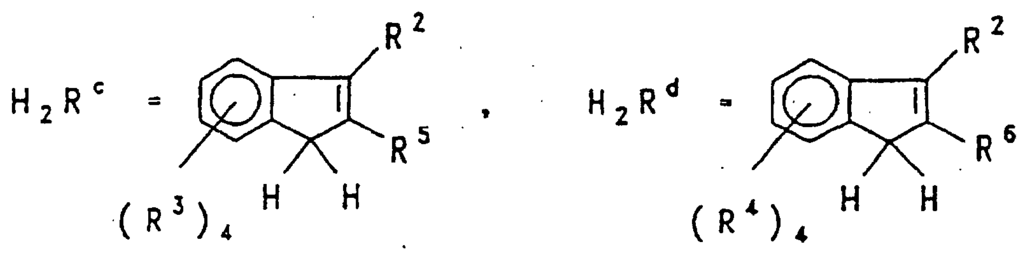

where

the radicals $R^2$ are identical or different and are hydrogen, a halogen atom, a $C_1$-$C_{10}$-alkyl group which can be halogenated, a $C_6$-$C_{10}$-aryl group, a $C_2$-$C_{10}$-alkenyl group, a $C_7$-$C_{40}$-arylalkyl group, a $C_7$-$C_{40}$-alkylaryl group, a $C_8$-$C_{40}$-arylalkenyl group, a $-NR_2{}^{10}$, $-OR^{10}$, $-SR^{10}$, $-OSiR_3{}^{10}$, $-SiR_3{}^{10}$ or $-PR_2{}^{10}$ radical, where $R^{10}$ is a halogen atom, a $C_1$-$C_{10}$-alkyl group or a $C_6$-$C_{10}$-aryl group,

the radicals $R^3$ are identical or different and are a hydrogen atom, a halogen atom, a $C_1$-$C_{20}$-alkyl group, a $C_1$-$C_{20}$-fluoroalkyl group, a $C_6$-$C_{30}$-aryl group, a $C_6$-$C_{30}$-fluoroaryl group, a $C_1$-$C_{20}$-alkoxy group, a $C_2$-$C_{20}$-alkenyl group, a $C_7$-$C_{40}$-arylalkyl group, a $C_8$-$C_{40}$-arylalkenyl group, a $C_7$-$C_{40}$-alkylaryl group, a $-NR_2{}^{10}$, $-OR^{10}$, $-SR^{10}$, $-OSiR_3{}^{10}$, $-SiR_3{}^{10}$ or $-PR_2{}^{10}$ radical, where $R^{10}$ is a halogen atom, a $C_1$-$C_{10}$-alkyl group or a $C_6$-$C_{10}$-aryl group, or two or more radicals $R^3$ together with the atoms connecting them form a ring system,

the radicals $R^4$ are identical or different and are a hydrogen atom, a halogen atom, a $C_1$-$C_{20}$-alkyl group, a $C_1$-$C_{20}$-fluoroalkyl group, a $C_6$-$C_{30}$-aryl group, a $C_6$-$C_{30}$-fluoroaryl group, a $C_1$-$C_{20}$-alkoxy group, a $C_2$-$C_{20}$-alkenyl group, a $C_7$-$C_{40}$-arylalkyl group, a $C_8$-$C_{40}$-arylalkenyl group, a $C_7$-$C_{40}$-alkylaryl group, a $-NR_2{}^{10}$, $-OR^{10}$, $-SR^{10}$, $-OSiR_3{}^{10}$, $-SiR_3{}^{10}$ or $-PR_2{}^{10}$ radical, where $R^{10}$ is a halogen atom, a $C_1$-$C_{10}$-alkyl group or a $C_6$-$C_{10}$-aryl group, or two or more radicals $R^4$ together with the atoms connecting them form a ring system,

$R^5$ is a halogen atom, a $C_1$-$C_{10}$-alkyl group, which can be halogenated, a $C_6$-$C_{10}$-aryl group, a $C_2$-$C_{10}$-alkenyl group, a $C_7$-$C_{40}$-arylalkyl group, a $C_7$-$C_{40}$-alkylaryl group, a $C_8$-$C_{40}$-arylalkenyl group, a $-NR_2^{10}$, $-OR^{10}$, $-SR^{10}$, $-OSiR_3^{10}$, $-SiR_3^{10}$ or $-PR_2^{10}$ radical, where $R^{10}$ is a halogen atom, a $C_1$-$C_{10}$-alkyl group or a $C_6$-$C_{10}$-aryl group,

$R^6$ is a hydrogen atom, a halogen atom, a $C_1$-$C_{10}$-alkyl group, which can be halogenated, a $C_6$-$C_{10}$-aryl group, a $C_2$-$C_{10}$-alkenyl group, a $C_7$-$C_{40}$-arylalkyl group, a $C_7$-$C_{40}$-alkyloxy group, a $C_8$-$C_{40}$-arylalkenyl group, a $-NR_2^{10}$, $-OR^{10}$, $-SR^{10}$, $-OSiR_3^{10}$, $-SiR_3^{10}$ or $-PR_2^{10}$ radical, where $R^{10}$ is a halogen atom, a $C_1$-$C_{10}$-alkyl group or a $C_6$-$C_{10}$-aryl group,

$R^7$ is

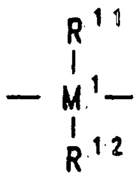 , 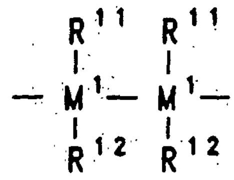 , 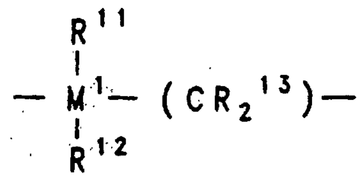 ,

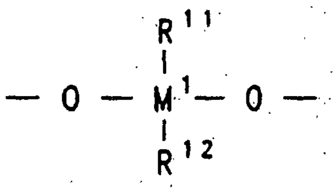 , 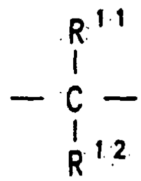 , 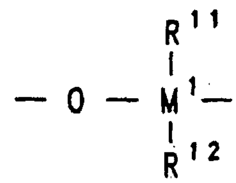 ,

$=BR^{11}$, $=AlR^{11}$, -Ge-, -Sn-, -O-, -S-, =SO, $=SO_2$, $=NR^{11}$, =CO, $=PR^{11}$ or $=P(O)R^{11}$, where

$R^{11}$, $R^{12}$ and $R^{13}$ are identical or different and are a hydrogen atom, a halogen atom, a $C_1$-$C_{20}$-alkyl group, a $C_1$-$C_{20}$-fluoroalkyl group, a $C_6$-$C_{30}$-aryl group, a $C_6$-$C_{30}$-fluoroaryl group, a $C_1$-$C_{20}$-alkoxy group, a $C_2$-$C_{20}$-alkenyl group, a $C_7$-$C_{40}$-arylalkyl group, a $C_8$-$C_{40}$-arylalkenyl group, a $C_7$-$C_{40}$-alkylaryl group, or $R^{11}$ and $R^{12}$ or $R^{11}$ and $R^{13}$ together with the atoms connecting them form a ring,
$M^1$ is silicon, germanium or tin,

$R^8$ and $R^9$ are identical or different and are a hydrogen atom, a halogen atom, a $C_1$-$C_{20}$-alkyl group, a $C_1$-$C_{20}$-fluoroalkyl group, a $C_6$-$C_{30}$-aryl group, a $C_6$-$C_{30}$-fluoroaryl group, a $C_1$-$C_{20}$-alkoxy group, a $C_2$-$C_{20}$-alkenyl group, a $C_7$-$C_{40}$-arylalkyl group, a $C_8$-$C_{40}$-arylalkenyl group, a $C_7$-$C_{40}$-alkylaryl group, or $R^8$ and $R^9$ together with the atoms connecting them form a ring,

m and n are identical or different and are zero, 1 or 2, where m plus n is zero, 1 or 2, wherein the two indenyl ligands have substitution patterns different from one another.

2. The bisindenyl ligand according to claim 1, wherein $R^2$ is hydrogen, the radicals $R^3$ are identical or different and are a hydrogen atom, a $C_1$-$C_{20}$-alkyl group or a $C_6$-$C_{30}$-aryl group, or two or more radicals $R^3$ together with the atoms connecting them form a ring system, the radicals $R^4$ are identical or different and are a hydrogen atom, a $C_1$-$C_{20}$-alkyl group or a $C_6$-$C_{30}$-aryl group, or two or more radicals $R^4$ together with the atoms connecting them form a ring system, $R^5$ is a $C_1$-$C_{10}$-alkyl group, $R^6$ is a hydrogen atom or a $C_1$-$C_{10}$-alkyl group, $R^7$ is a radical

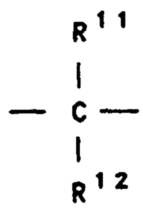 , 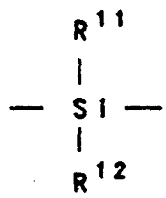 or 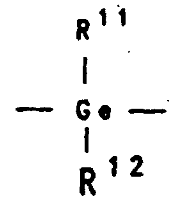 ,

where $R^{11}$ and $R^{12}$ are identical or different and are a $C_1$-$C_{20}$-alkyl group or a $C_6$-$C_{30}$-aryl group, $R^8$ and $R^9$ are identical or different and are a hydrogen atom, a $C_1$-$C_{20}$-alkyl group or a $C_6$-$C_{30}$-aryl group, and m plus n is zero or 1.

**3.** The bisindenyl ligand according to claim 1, wherein

$-(CR^8R^9)_m-R^7-(CR^8R^9)_n-$ is dialkylsilanediyl, alkyl(aryl)silanediyl, 1,2-ethanediyl, 1,2-butanediyl, diarylsilanediyl, dialkylmethylene, diarylmethylene, alkyl(aryl)methylene, alkyl(vinyl)-silanediyl, aryl(vinyl)silanediyl or dialkylgermyl,

$R^3{}_4R^2R^5$-1-indenyl is 2-alkyl-4-aryl-1-indenyl, 2,4-dialkyl-1-indenyl, 2,4,6-trialkyl-1-indenyl, 2-alkyl-4,5-benzo-1-indenyl, 2,5-dialkyl-1-indenyl, 2,5,6-trialkyl-2-indenyl, 2,4,5-trialkyl-1-indenyl, 2-alkyl-1-indenyl, 2-aryl-1-indenyl, 2,6-alkyl-4-aryl-1-indenyl, 2-alkyl-5-aryl-1-indenyl, 2-alkyl-5,6-diaryl-1-indenyl, 2-alkyl-4,5-diaryl-1-indenyl or 2-alkyl-4,6-diaryl-1-indenyl, and

$R^4{}_4R^2R^6$-1-indenyl is 2-alkyl-4-aryl-1-indenyl, 2,4-dialkyl-1-indenyl, 2,4,6-trialkyl-1-indenyl, 2-alkyl-4,5-benzo-1-indenyl, 2,5-dialkyl-1-indenyl, 2,5,6-trialkyl-1-indenyl, 2,4,5-trialkyl-1-indenyl, 2-alkyl-1-indenyl, 2-aryl-1-indenyl, 2,6-alkyl-4-aryl-1-indenyl, 2-alkyl-5-aryl-1-indenyl, 2-alkyl-5,6-diaryl-1-indenyl, 2-alkyl-4,5-diaryl-1-indenyl, 2-alkyl-4,6-diaryl-1-indenyl or 1-indenyl.

**4.** The use of a bisindenyl ligand of the formula IV according to claim 1, 2 or 3 for preparing metallocene compounds.

**Revendications**

**1.** Ligands bisindényle de la formule IV :

$$HR^c - (CR^8R^9)_m - R^7 - (CR^8R^9)_n - R^dH \qquad (IV)$$

avec

$H_2R^c$ = 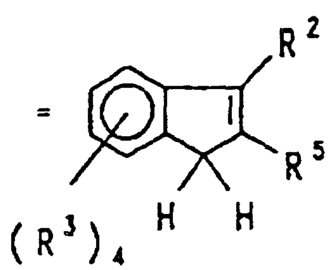 , $H_2R^d$ = 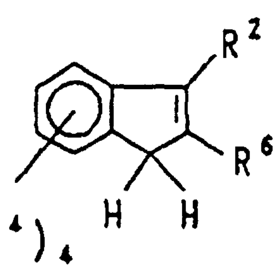

où

les restes $R^2$ sont identiques ou différents et représentent un atome d'hydrogène, un atome d'halogène, un reste alkyle en $C_1$-$C_{10}$, qui peut être halogéné, un reste aryle en $C_6$-$C_{10}$, un reste alcényle en $C_2$-$C_{10}$, un reste

arylalkyle en $C_7$-$C_{40}$, un reste alkylaryle en $C_7$-$C_{40}$, un reste arylalcényle en $C_8$-$C_{40}$, un reste $-NR_2^{10}$, $-OR^{10}$, $-SR^{10}$, $-OSiR_3^{10}$, $-SiR_3^{10}$ ou $-PR_2^{10}$, où $R^{10}$ représente un atome d'halogène, un reste alkyle en $C_1$-$C_{10}$, un reste aryle en $C_6$-$C_{10}$,

les restes $R^3$ sont identiques ou différents et représentent un atome d'hydrogène, un atome d'halogène, un reste alkyle en $C_1$-$C_{20}$, un reste fluoroalkyle en $C_1$-$C_{20}$, un reste aryle en $C_6$-$C_{30}$, un reste fluoroaryle en $C_6$-$C_{30}$, un reste alcoxy en $C_1$-$C_{20}$, un reste alcényle en $C_2$-$C_{20}$, un reste arylalkyle en $C_7$-$C_{40}$, un reste arylalcényle en $C_8$-$C_{40}$, un reste alkylaryle en $C_7$-$C_{40}$, un reste $-NR_2^{10}$, $-OR^{10}$, $-SR^{10}$, $-OSiR_3^{10}$, $-SiR_3^{10}$ ou $-PR_2^{10}$, où $R^{10}$ représente un atome d'halogène, un reste alkyle en $C_1$-$C_{10}$, un reste aryle en $C_6$-$C_{10}$, ou deux restes $R^3$ ou plus peuvent former un système cyclique avec l'atome qui les relie,

les restes $R^4$ sont identiques ou différents et représentent un atome d'hydrogène, un atome d'halogène, un reste alkyle en $C_1$-$C_{20}$, un reste fluoroalkyle en $C_1$-$C_{20}$, un reste aryle en $C_6$-$C_{30}$, un reste fluoroaryle en $C_6$-$C_{30}$, un reste alcoxy en $C_1$-$C_{20}$, un reste alcényle en $C_2$-$C_{20}$, un reste arylalkyle en $C_7$-$C_{40}$, un reste arylalcényle en $C_8$-$C_{40}$, un reste alkylaryle en $C_7$-$C_{40}$, un reste $-NR_2^{10}$, $-OR^{10}$, $-SR^{10}$, $-OSiR_3^{10}$, $-SiR_3^{10}$ ou $-PR_2^{10}$, où $R^{10}$ représente un atome d'halogène, un reste alkyle en $C_1$-$C_{10}$, un reste aryle en $C_6$-$C_{10}$, ou deux restes $R^4$ ou plus peuvent former un système cyclique avec l'atome qui les relie,

le reste $R^5$ représente un atome d'halogène, un reste alkyle en $C_1$-$C_{10}$, qui peut être halogéné, un reste aryle en $C_6$-$C_{10}$, un reste alcényle en $C_2$-$C_{10}$, un reste arylalkyle en $C_7$-$C_{40}$, un reste alkylaryle en $C_7$-$C_{40}$, un reste arylalcényle en $C_8$-$C_{40}$, un reste $-NR_2^{10}$, $-OR^{10}$, $-SR^{10}$, $-OSiR_3^{10}$, $-SiR_3^{10}$ ou $-PR_2^{10}$, où $R^{10}$ représente un atome d'halogène, un reste alkyle en $C_1$-$C_{10}$, un reste aryle en $C_6$-$C_{10}$,

le reste $R^6$ représente un atome d'hydrogène, un atome d'halogène, un reste alkyle en $C_1$-$C_{10}$, qui peut être halogène, un reste aryle en $C_6$-$C_{10}$, un reste alcényle en $C_2$-$C_{10}$, un reste arylalkyle en $C_7$-$C_{40}$, un reste alcoxyaryle en $C_7$-$C_{40}$, un reste arylalcényle en $C_8$-$C_{40}$, un reste $-NR_2^{10}$, $-OR^{10}$, $-SR^{10}$, $-OSiR_3^{10}$, $-SiR_3^{10}$ ou $-PR_2^{10}$, où $R^{10}$ représente un atome d'halogène, un reste alkyle en $C_1$-$C_{10}$, un reste aryle en $C_6$-$C_{10}$,

$R^7$ est

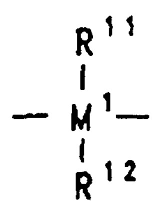 , 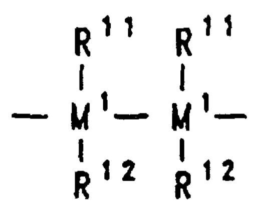 , 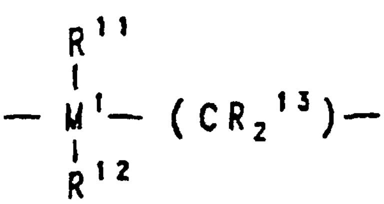 ,

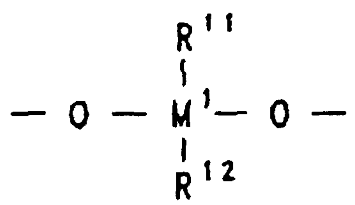 , 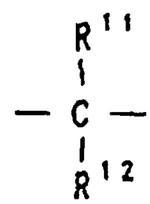 , 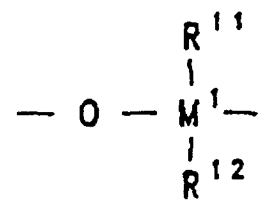 ,

$=BR^{11}$, $=AlR^{11}$, -Ge-, -Sn-, -O-, -S-, =SO, $=SO_2$, $=NR^{11}$, =CO, $=PR^{11}$ ou $-P(O)R^{11}$,

où

$R^{11}$, $R^{12}$ et $R^{13}$ sont identiques ou différents et représentent un atome d'hydrogène, un atome d'halogène, un reste alkyle en $C_1$-$C_{20}$, un reste fluoroalkyle en $C_1$-$C_{20}$, un reste aryle en $C_6$-$C_{30}$, un reste fluoroaryle en $C_6$-$C_{30}$, un reste alcoxy en $C_1$-$C_{20}$, un reste alcényle en $C_2$-$C_{20}$, un reste arylalkyle en $C_7$-$C_{40}$, un reste arylalcényle en $C_8$-$C_{40}$, un reste alkylaryle en $C_7$-$C_{40}$, ou $R^{11}$ et $R^{12}$ ou $R^{11}$ et $R^{13}$ forment un cycle avec l'atome qui les relie,

$M^1$ est l'atome de silicium, de germanium ou d'étain,

les restes $R^8$ et $R^9$ sont identiques ou différents et représentent un atome d'hydrogène, un atome d'halogène, un reste alkyle en $C_1$-$C_{20}$, un reste fluoroalkyle en $C_1$-$C_{20}$, un reste aryle en $C_6$-$C_{30}$, un reste fluoroaryle en $C_6$-$C_{30}$, un reste alcoxy en $C_1$-$C_{20}$, un reste alcényle en $C_2$-$C_{20}$, un reste arylalkyle en $C_7$-$C_{40}$, un reste arylalcényle en $C_8$-$C_{40}$, un reste alkylaryle en $C_7$-$C_{40}$, ou $R^8$ et $R^9$ forment un cycle avec l'atome qui les relie,

m et n sont identiques ou différents et sont zéro, 1 ou 2, où m plus n est zéro, 1 ou 2,

**caractérisé en ce que** les deux ligands indényle présentent des schémas de substitution différents les uns des autres.

**2.** Ligands bisindényle selon la revendication 1, où $R^2$ est hydrogène, les restes $R^3$ sont identiques ou différents et représentent un atome d'hydrogène, un reste alkyle en $C_1$-$C_{20}$ ou un reste aryle en $C_6$-$C_{30}$, ou deux restes $R^3$ ou plus forment un système cyclique avec l'atome qui les relie, les restes $R^4$ sont identiques ou différents et représentent un atome d'hydrogène, un reste alkyle en $C_1$-$C_{20}$ ou un reste aryle en $C_6$-$C_{30}$, ou deux restes $R^4$ ou plus forment un système cyclique avec l'atome qui les relie, le reste $R^5$ représente un reste alkyle en $C_1$-$C_{10}$, le reste $R^6$ représente un atome d'hydrogène ou un reste alkyle en $C_1$-$C_{10}$, $R^7$ est un reste:

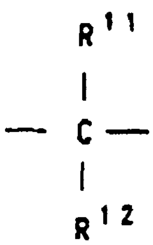 , 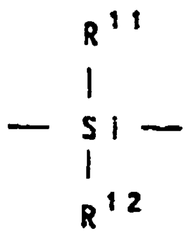 ou 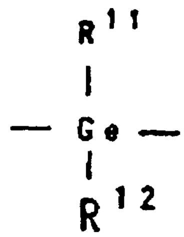 ,

où

$R^{11}$, $R^{12}$ et $R^{13}$ sont identiques ou différents et représentent un reste alkyle en $C_1$-$C_{20}$ ou un reste aryle en $C_6$-$C_{30}$, les restes $R^8$ et $R^9$ sont identiques ou différents et représentent un atome d'hydrogène, un reste alkyle en $C_1$-$C_{20}$ ou un reste aryle en $C_6$-$C_{30}$, et m plus n est zéro ou 1.

**3.** Ligands bisindényle selon la revendication 1, où $-(CR^8R^9)_mR^7-(CR^8R^9)_n-$ est dialkylsilanediyle, alkyl(aryl)silanediyle, 1,2-éthanediyle, 1,2-butanediyle, diarylsilanediyle, dialkylméthylène, diarylméthylène, alkyl(aryl)méthylène, alkyl(vinyl)silanediyle, aryl(vinyl)silanediyle ou dialkylgermyle,

$R^3{}_4R^2R^5$-1-indényle est 2-alkyl-4-aryl-1-indényle, 2,4-dialkyl-1-indényle, 2,4,6-trialkyl-1-indényle, 2-alkyl-4,5-benzo-1-indényle, 2,5-dialkyl-1-indényle, 2,5,6-trialkyl-1-indényle, 2,4,5-trialkyl-1-indényle, 2-alkyl-1-indényle, 2-aryl-1-indényle, 2,6-alkyl-4-aryl-1-indényle, 2-alkyl-5-aryl-1-indényle, 2-alkyl-5,6-diaryl-1-indënyle, 2-alkyl-4,5-diaryl-1-indényle ou 2-alkyl-4,6-diaryl-1-indényle, et
$R^4{}_4R^2R^6$-1-indényle est 2-alkyl-4-aryl-1-indényle, 2,4-dialkyl-1-indényle, 2,4,6-trialkyl-1-indényle, 2-alkyl-4,5-benzo-1-indényle, 2,5-dialkyl-1-indényle, 2,5,6-trialkyl-1-indényle, 2,4,5-trialkyl-1-indényle, 2-alkyl-1-indényle, 2-aryl-1-indényle, 2,6-alkyl-4-aryl-1-indényle, 2-alkyl-5-aryl-1-indényle, 2-alkyl-5,6-diaryl-1-indényle, 2-alkyl-4,5-diaryl-1-indényle ou 2-alkyl-4,6-diaryl-1-indényle ou 1-indényle.

**4.** Utilisation d'un ligand bisindényle de la formule IV selon la revendication 1, 2 ou 3, pour la préparation de composés métallocène.